# EUROPEAN PATENT SPECIFICATION

(11) **EP 3 876 696 B1**
(45) Date of publication and mention of the grant of the patent: **11.01.2023**
(21) Application number: 19805892.7
(22) Date of filing: 07.11.2019
(51) Int. Cl.: A01G 3/025, A01G 3/033

(54) **LOPPING SHEAR OR LOPPER**
BAUMSCHERE ODER ASTSCHERE
SÉCATEUR D'ÉCLAIRCIE OU ÉBRANCHEUR

(30) Priority: 09.11.2018 IT 201800010192
(43) Date of publication of application: 15.09.2021
(73) Proprietor: ARCHMAN S.R.L., 33085 Maniago (PN) (IT)
(72) Inventor: PITTAU, Giovanni, 33085 Maniago (IT)
(74) Representative: D'Agostini, Giovanni
(86) International application number: PCT/EP2019/000308
(87) International publication number: WO 2020/094249

(56) References cited:
- EP-A1- 2 194 771
- DE-A1- 19 815 009
- DE-A1-102015 206 424

## Description

### Technical field

The present invention generally relates to the applicative field of the cutting tools and in particular to a lopping shear or lopper for pruning, as defined in the pre-characterizing portion of claim 1 and to an operating method of lopping shear or lopper for pruning.

### Prior art

In the field of production of cutting tools, the use of telescopic systems is well known, in particular with an extendible stick with at its end a shear and from the side of the handle a traction system, generally a rope system or other remote driving mechanism, that shuts the blade on the corresponding counter-blade to allow the cutting operation on pieces placed at a distance, which is not easily reachable by the operator, such as for example in case of pruning of branches not easily accessible because of their height from the ground.

The operator acts on the remote driving handle, which mechanically controls a transmission system; such a system acts by means of a chain on the blade retracting it towards the counter-blade in order to perform the cutting.

The execution of the function of increasing the applied force is also known by means of:
- side extension of the orthogonal blade with respect to the cutting surface: said extension forms the arm of a lever suitable for increasing the retraction force exerted by the operator on the cutting point;
- resorting to a couple of eccentric wheels: the driving handle is tangentially connected on one of the two wheels causing it to turn around its own center. Said wheel in turn drags in rotation the second wheel, which is eccentric with respect to the first one. Said second wheel pulls the driving chain; said chain, acting on the side extension of the blade, retracts it towards the counter-blade.

This kind of mechanisms are known, for example, from patent application EP0895712, which describes a lopper for pruning, including a cutting head provided with a blade equipped with a return spring. The blade cooperates with a jaw and is moved by means of a driving mechanism. The driving mechanism includes a first and a second wheel rotating with respect to a first axis. A chain connects the first wheel to the blade and the second wheel is coupled to a driving chain. The first wheel is eccentric with respect to the second wheel. The lopper includes an intermediate shaft and a lower handgrip which is suitable to drive the blade with respect to the jaw by means of traction of the driving rope, which causes the second wheel to rotate, which in turn causes the first wheel to rotate obtaining an effect of reduction of the force because of the structure of the two wheels.

A further known solution is the one described in patent EP2194771 in the name of the same applicant, in which a solution of cutting tool of the scissor-type with pruning head supported on an extension stick is described, which allows to cut branches placed upwards and not reachable by the operator. The pruning head includes a blade and a counter-blade in which the blade is controlled by means of a rope or belt sliding on pulleys. The rope or belt acts in traction on an extension or arm integral with the blade for traction, in order to cause the blade to close on the counter-blade making the cutting. The rope or belt is fixed on a driving handle that slides on the extension stick and is connected to a system of return pulleys that allows an extension of the telescopic extension stick. The extension stick is made of an external pipe along which the sliding of the driving handle occurs and of a sliding pipe placed internally with respect to the external pipe, the sliding of the internal pipe allowing the extension in length of the extension stick to operate at different heights. The extension is possible thanks to the presence of the return pulleys of the rope or belt. Some pulleys are actually supported by a movable trolley and external and internal pipe include guiding grooves and guiding supports in order to prevent the rope or belt from blocking during the shortening and lengthening operations of the tool by re-entering and extraction of the internal pipe from the external pipe.

### Problems of prior art

The greater disadvantages of said solutions are:
- manufacturing complexity and, in particular, in rope and return pulley/s systems it is easy for the rope tensioned between the pulleys to get tangled, said systems generally have more channels with more increasing coils;
- maintenance problems due to the complex pulleys return system, in which the whole system is included within the telescopic system made up of two section bars inserted one in the other;
- maintenance problems due to the presence of a chain requiring lubrication of same, in order to reduce the risk of jamming. Moreover, the replacement operations of the chain require the use of tools for disassembling it and for fixing the new chain to the movable devices;
- reliability;
- security;
- limited increase of the applied force due to the fact that it is executed by means of couples of multichannel sheaves in the first case and eccentric wheels and lever.

### Aim of the invention

The present invention is intended to provide a new driving mechanism of the cutting tool, which allows to obtain a greater reliability, simplifying at the same time the maintenance of the tool and allowing greater force increasing factors.

### Concept of the invention

The aim is achieved by means of the characteristics of the main claims 1 and 26.

The sub-claims represent advantageous solutions.

### Advantageous effects of the invention

The solution according to the present invention allows to obtain the following advantages:
- reduced and simplified maintenance;
- reduced jamming risk and greater reliability;
- high security;
- greater values of the force increasing factors of the applied force.

The solution according to the present invention allows to obtain an effective lopping shear or lopper, which is easy to use and which allows to reduce the operator's fatigue.

### Description of the drawings

In the following, a solution is described with reference to the enclosed drawings, which are to be considered as non-limiting example of the present invention in which:
Fig. 1 represents a side view of the lopping shear or lopper manufactured according to the present invention.
Fig. 2 represents a side view of the lopping shear or lopper of Fig. 1, in which a part of the handgrip has been removed in order to show the internal mechanism.
Fig. 3 represents a perspective exploded view of the handgrip portion of the lopping shear or lopper of Fig. 1.
Fig. 4 represents a partially exploded perspective view of the handgrip portion of the lopping shear or lopper of Fig. 1.
Fig. 5 represents a perspective view of the handgrip portion of the lopping shear or lopper of Fig. 1.
Fig. 6 represents a perspective view of the connecting system to the cutting blade before the respective assembly.
Fig. 7 represents a perspective view of the connecting system to the cutting blade of Fig. 6 partially assembled.
Fig. 8 represents a side view of the cutting head of the lopping shear or lopper made according to the present invention.
Fig. 9 represents a perspective view of the cutting head of Fig. 8 in a first orientation condition.
Fig. 10 represents a perspective view of the cutting head of Fig. 9 in a different orientation condition.
Fig. 11 represents an exploded perspective view of the cutting head of Fig. 8.
Fig. 12 is a simplified view that shows the rope or belt passage allowing the telescopic lengthening.
Fig. 13 is a view of the section of the internal pipe of the lopping shear or lopper of Fig. 1.
Fig. 14 is a view of the section of the external pipe of the lopping shear or lopper of Fig. 1.
Fig. 15 is a view of the pipe-clamp of the lopping shear or lopper of Fig. 1.
Fig. 16 is a view of the sliding plug of the lopping shear or lopper of Fig. 1.
Fig. 17 shows another embodiment of the inventive lopping shear or lopper.
Fig. 18 shows another embodiment of the inventive lopping shear or lopper.

### Description of the invention

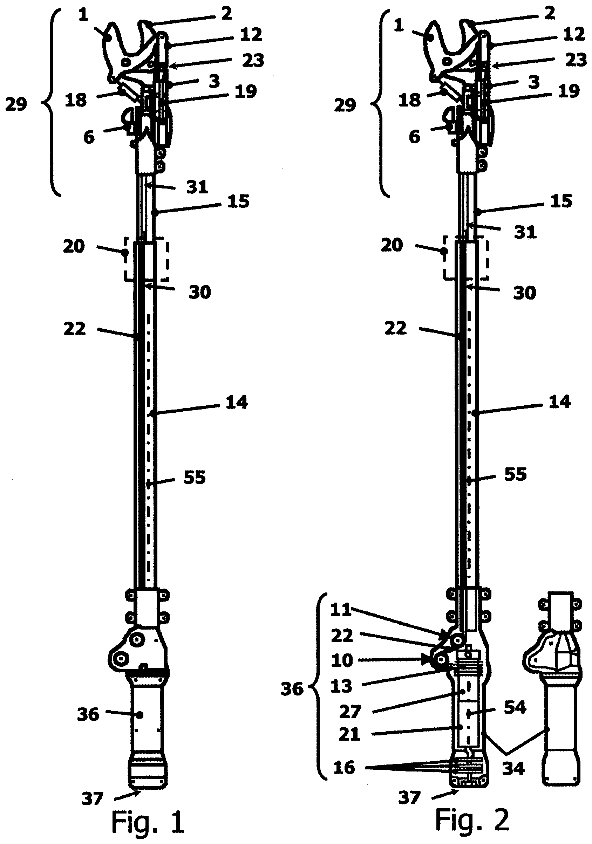

The present invention relates to (Fig. 1, Fig. 2) a lopping shear or lopper for pruning and an operating method of lopping shear or lopper for pruning.

The lopping shear or lopper is provided (Fig. 1, Fig. 2, Fig. 8, Fig. 9, Fig. 10) with a pruning head (29) comprising a blade (1) and a counter-blade (2) which are supported on a blade-support (3) member.

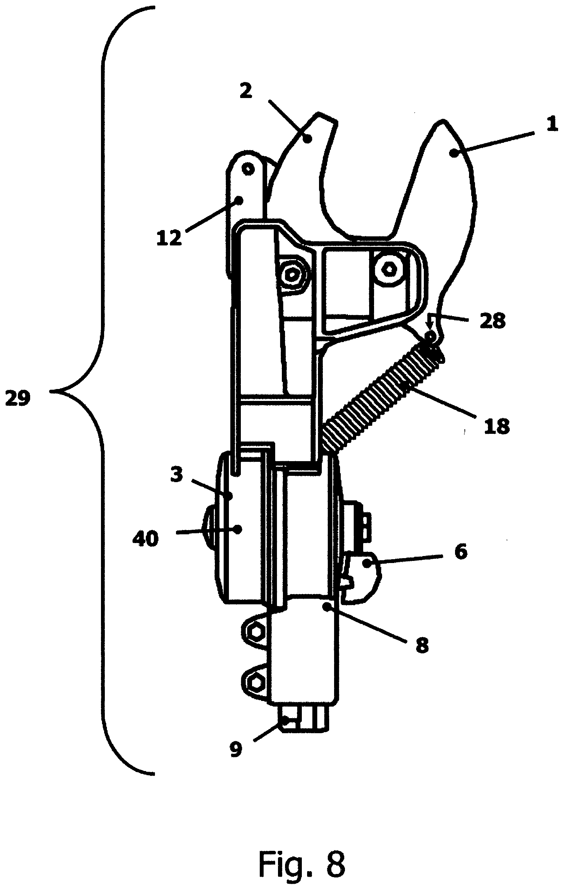

The blade (1) is tapered to a convex cutting edge at an acute angle and is provided (Fig. 8, Fig. 9, Fig. 10, Fig. 11) with a hole (28) for hooking the return spring (18) and with a hooking point (39) for fixing the control system, which uses the lever principle to perform the increase of the force applied during the cut.

The counter-blade (2) has (Fig. 8, Fig. 9, Fig. 10, Fig. 11) a less acute cutting angle with respect to the blade angle (1) and the surface of the counter-blade (2) may be provided with teeth in order to avoid the slipping of the branch during the cutting phase of the same. The counter-blade (2) is integral with the blade-support (3), while the blade (1) is rotable on a hinging point with respect to the counter-blade (2). Preferably the blade (1) is mounted on the counter-blade (2) in such a way that it can be rotated around the hinging point and closed towards the counter-blade (2), so that the cutting action occurs both for pressing the blade (1) on the piece to be cut, maintained in position by the counter-blade (2) and for crawling the cutting surface of the blade (1) on the piece to be cut.

Once the cutting has been carried out, the opening of the pruning head (29) is made by means of the return spring (18) fixed on the blade-support (3) on the one hand and, on the other hand, on the blade (1) by means of the hole (28).

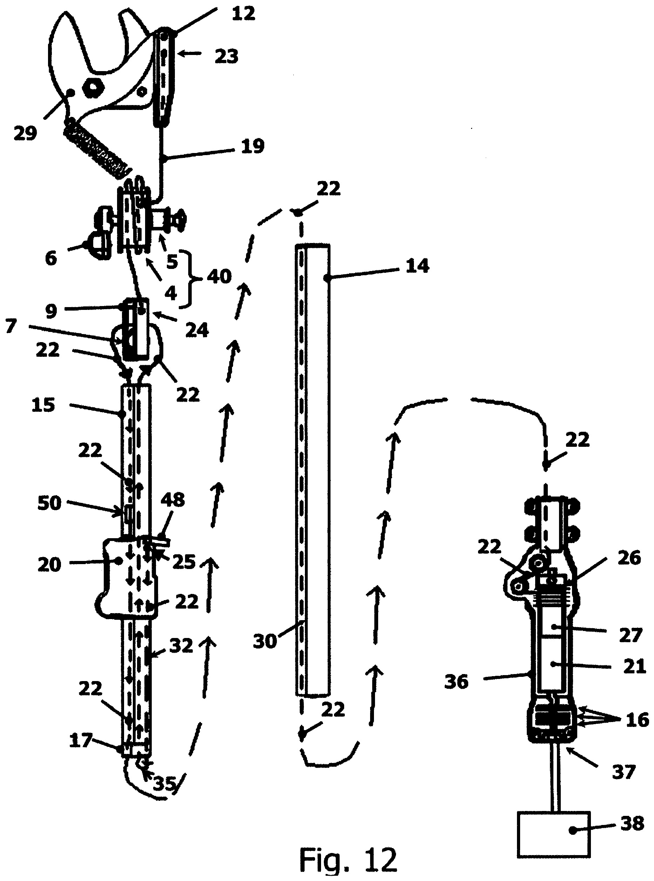

The closure of the blade (1) occurs (Fig. 8, Fig. 9, Fig. 10, Fig. 11) by means of the traction exerted through a first rope or belt (22) and a second rope or belt (19). The second rope or belt (19) is fixed to the blade (1) by means of a tie-rod (12), which is fixed to the blade (1) in the hooking point (39) for fixing the control system. For example, the second rope or belt (19) can be fixed (Fig. 12) to the tie-rod (12) in a first fixing point (23) of the second rope by a knot, which makes it easier to replace it also by the operator itself if necessary.

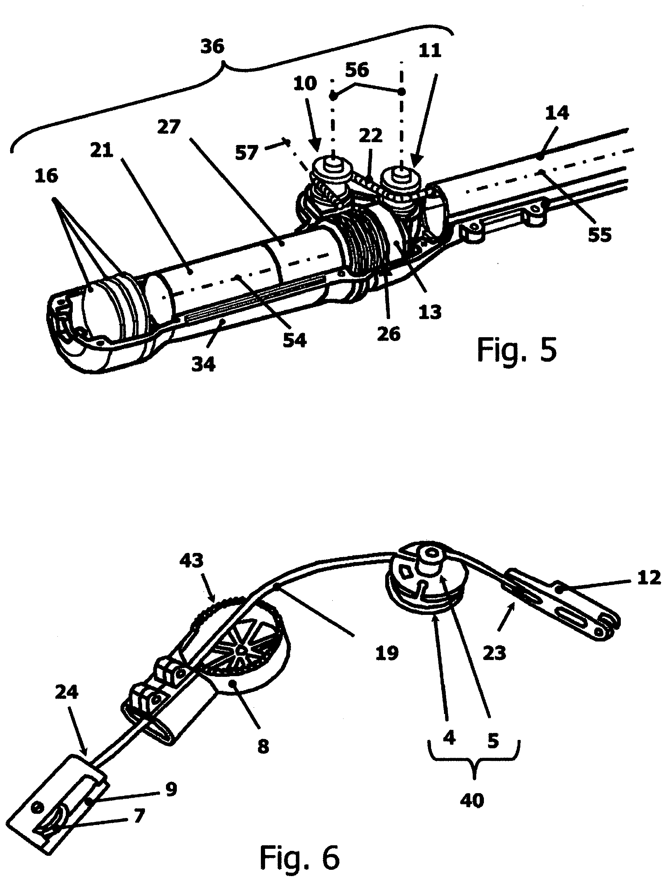

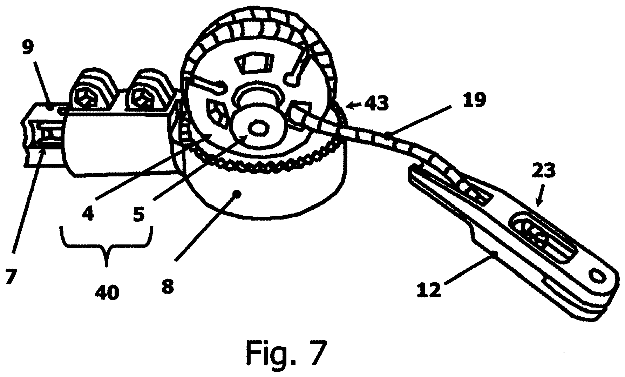

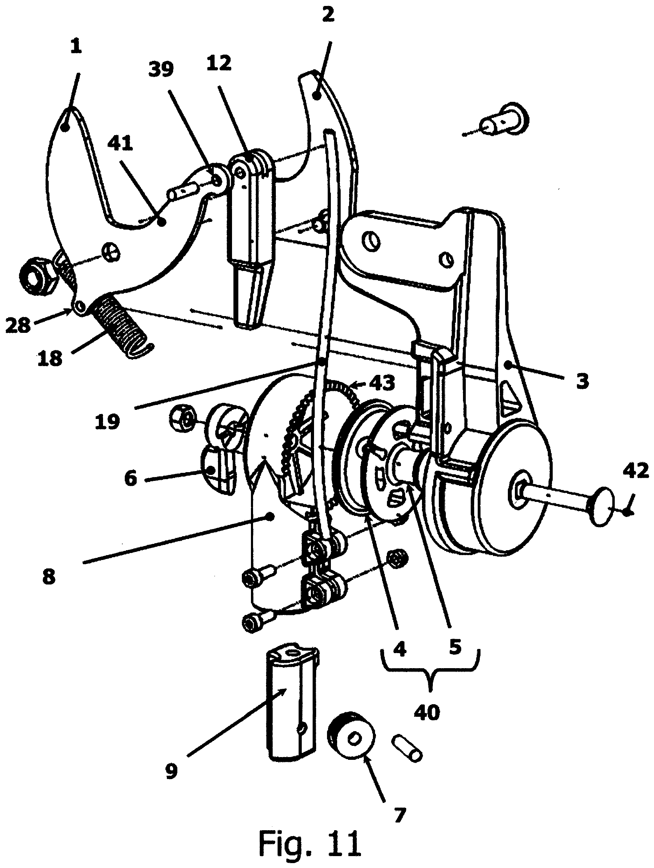

The second rope or belt (19) carries out (Fig. 6, Fig. 7, Fig. 11, Fig. 12) one or more rounds on an internal wheel (40) and is fixed (Fig. 11) at the upper end of a trolley (9) in a second fixing point (24) of the second rope.

Acting on the driving control, as it will be shown in the following description, the trolley (9) is pulled towards the removal direction from the pruning head (29). In this way the trolley (9) pulls the second rope or belt (19). Since the second rope or belt (19) carries out one or more rounds around the internal wheel (40), the traction applied by the trolley (9) is translated in a rotation of the internal wheel (40) on its rotation axis with consequent release of part of the second rope or belt (19) wound around it towards the traction direction of the trolley (9). Thanks to the particular structure of the internal wheel (40), an action of reduction of the traction force can be advantageously obtained, i.e. the cutting force is increased with respect to the traction force applied by the driving. The internal wheel (40) actually includes a first wheel (4) and a second wheel (5), which are integral with each other but have different diameters. While the second rope or belt (19) unwinds from the first wheel (4) with a greater diameter on the one hand, the second rope or belt (19) winds around the second wheel (5) with a smaller diameter, recalling the tie-rod (12) in direction of approach towards the internal wheel (40), in such a way that the tie-rod (12) in turn causes the rotation of the blade (1), which progressively tightens on the counter-blade (2) carrying out the cutting.

It is foreseen that the second rope or belt (19) is fixed to the internal wheel (40) by a knot, defining in this way a fixed position of the second rope or belt (19) thanks to which the second rope or belt (19) is divided into two portions of which a first portion is defined by the distance between internal wheel (40) and tie-rod (12), while a second portion defines the maximum excursion the trolley (9) can carry out within the internal pipe (15).

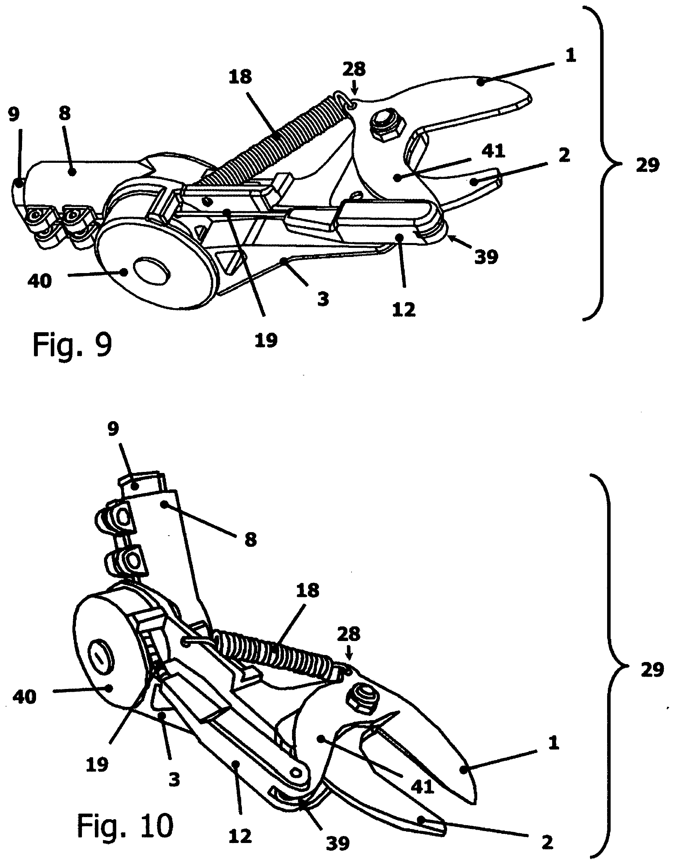

A further action of increase in the cutting agent force is obtained thanks to the structure of the blade (1) and in particular thanks to the fact that the blade (1) is provided (Fig. 9, Fig. 10, Fig. 11) with an extension arm (41), which allows the use of the principle of the lever to obtain the traction of the blade (1) and cause it to rotate around its hinging point, that is placed at a distance corresponding to the one of the length of said arm (41).

The pruning head (29) can be oriented by rotating the blade-support body (3) with respect to the mounting support (8) on the telescopic rod. A blocking means (6), for example in the form of a clamping wing nut, maintains the support (8) pressed against the blade-support body (3) in correspondence (Fig. 11) of the coupling axis (42), which corresponds to the rotation axis of the previously described internal wheel (40). The support (8) is provided (Fig. 6, Fig. 7, Fig. 11) with teeth (43) on the coupling surface with the blade-support (3), which block the rotation of the blade-support (3) with respect to the support (8) when the blocking means (6) exerts its clamping action between those two elements. Preferably, the blade-support (3) is provided with corresponding counter-teeth coupling with the teeth (43) of the support (8), in order to obtain an effective blocking action of the rotation in the phase of use of the cutting tool. By loosening the blocking means (6), blade-support (3) and support (8) will mutually move away, unhooking the coupling between teeth (43) and counter-teeth, allowing the rotation of the blade-support (3) with respect to the support (8) in order to orient (Fig. 10) the pruning head (29) with respect to the support (8) according to the operator's needs. In case of a clockwise rotation operation of the pruning head (29), the internal wheel (40) remains fixed and the second exceeding rope or belt (19) is winded around it to compensate the smaller distance of the tie-rod (12). Likewise, in the counter-clockwise rotation operation of the pruning head (29), the second rope or belt (19) necessary to compensate the greater distance of the tie-rod (12) is recovered by means of unwinding of a portion of the second rope or belt (19) from the internal wheel (40).

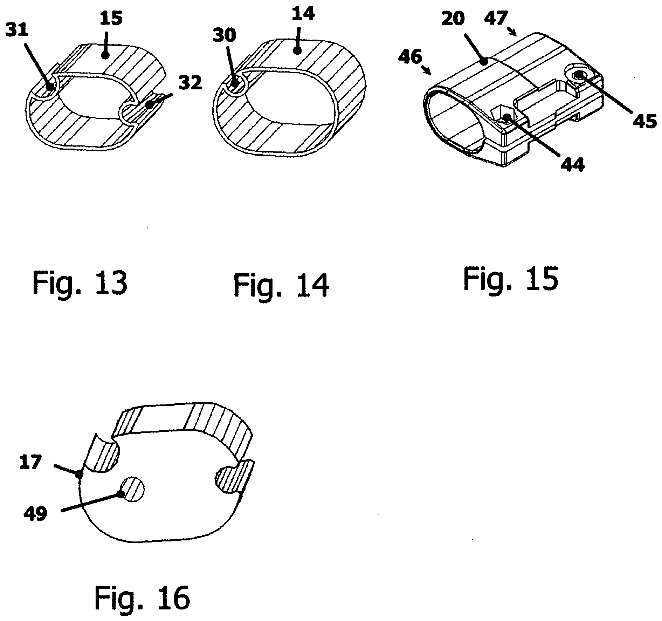

The telescopic rod includes (Fig. 14) an external pipe (14) within which (Fig. 13) in a slidable way an internal pipe (15) is applied, the extraction of which from the external pipe (14) allows a lengthening of the telescopic rod and the insertion of which inside the external pipe (14) allows a shortening of the telescopic rod, allowing the operator to adjust the cutting height as desired. The support (8) is mounted on the internal pipe (15).

The internal pipe (15) also has the guiding function of the previously described traction trolley (9) that practically constitutes a coupling interface with the pruning head (29) for the driving of same and for exerting the cutting action. The traction trolley (9) slides within the internal pipe (15).

Advantageously the trolley (9) has a sectional structure essentially corresponding to the sectional structure of the internal pipe (15) in such a way that the sliding of the trolley (9) within the internal pipe (15) is guided in a precise way, avoiding bindings of the same. In particular, the guided action of the trolley within the internal pipe also occurs thanks to the structure of the grooves (31, 32) of the internal pipe (15).

The (Fig. 13) internal pipe (15) and the (Fig. 14) external pipe (14) are structured in such a way that they can be inserted one inside the other.

The (Fig. 13) internal pipe (15) is provided with two grooves:
- a first groove (32), in which the closed portion contained inside the external pipe (14) constitutes an internal duct within which the first rope or belt (22) slides;
- a second groove (31) coupling with a corresponding third groove (30) of the external pipe (14) for the execution of the coupling between the two pipes.

The (Fig. 14) external pipe (14) is provided with the third groove (30) coupling with the corresponding second groove (31) of the internal pipe (15). The third groove (30) has different functions:
- constitutes the recess for the longitudinal coupling with the internal pipe (15);
- constitutes the sliding seat of the first rope or belt (22) for being fixed in a second fixing point (26) near the driving system (13, 21, 27) for the control of the cutting action.

A pipe-clamp (20) (Fig. 15) is structured with a first portion (46) structured for inserting the external pipe (14) and a second portion (47) structured for inserting the internal pipe (15). The pipe-clamp (20) is fixed (Fig. 1, Fig. 2, Fig. 12, Fig. 15) to the external pipe (14) by means of a screw inserted (Fig. 15) in the first seat (44) and is clamped on the internal pipe by means of (Fig. 12) a releasable fixing means (48) preferably in the form of wing nut inserted in the second seat (45). By means of the releasable fixing means (48) it is possible to firmly block the reciprocal sliding between internal pipe (15) and external pipe (14) and once the fixing means (48) has been released, it is possible to carry out the extension of the telescopic rod, which occurs by making the external pipe (14) coming out from the internal pipe (15). It is possible to block the rod in the desired extension position by means of the releasable fixing means (48) itself, which newly clamps the internal pipe (15) blocking it with respect to the external pipe (14). The pipe-clamp (20) is structured in such a way that the grooves on the internal and external pipes are not obstructed, allowing the rope or the belt to pass within the grooves, passing under the pipe-clamp (20) without meeting obstacles.

The path (Fig. 12) of the first rope or belt (22) is configured in such way to allow the reciprocal telescopic extension between internal pipe (15) and external pipe (14) maintaining the position of the operating system (13, 21, 27) fixed for the control of the cutting action and the position of the trolley (9) which transfers to the pruning head (29) the traction action exerted by the operating system (13, 21, 27). Actually, the first rope or belt (22) is fixed (Fig. 12) in a first fixing point (25) of the first rope or belt which is near the pipe-clamp (20). The fixing may occur for example by means of a knot, and this helps maintenance operations and possible replacement of the first rope or belt. After fixing the first rope or belt (22) in the first fixing point (25) on the pipe-clamp (20), the first rope or belt (22) passes under the pipe-clamp (20) within the first groove (32) and passes along this first groove (32) in an opposite direction with respect to the direction oriented towards the application position of the pruning head (29) until it reaches the corresponding final end of the internal pipe (15). When it reaches this final end, the first rope or belt (22) forms a ring (35) and internally enters the internal pipe (15) going back in a direction opposite to the direction along which it passed within the first groove (32). The passage between the exterior of the internal pipe (15) from the first groove (32) towards the internal pipe (15) occurs in a guided way by means of the sliding plug (17) which is provided with a crossing passage (49) through which the first rope or belt (22) may be passed inside the internal pipe (15) in a guided configuration. The first rope or belt (22) goes back inside the internal pipe (15) until it comes out from the internal pipe (15) near the application position of the pruning head (29). The first rope or belt (22) is therefore engaged in a sliding way on the trolley (9) which transfers to the pruning head (29) the traction action exerted by the operating system (13, 21, 27) on the first rope or belt (22). The sliding engagement occurs making the first rope or belt (22) to turn (Fig. 6, Fig. 7, Fig. 11, Fig. 12) around a return pulley (7) which allows to send back the first rope or belt (22) always inside the internal pipe (15) in the opposite direction with respect to the direction oriented towards the application position of the pruning head (29). After passing through a portion inside the internal pipe (15), which corresponds to the sliding path of the trolley (9) within the internal pipe (15), the first rope or belt (22) comes out from the internal pipe (15) through an eyelet (50) obtained within the sliding and guiding seat defined by the second groove (31) of the internal pipe (15). Near the pipe-clamp (20), the first rope or belt (22) passes under the pipe-clamp (20) in a sliding way and continues its path within the third groove (30), which is on the external pipe (14), until penetrating within the handgrip (36) applied at the final end of the external pipe (14), opposite with respect to the insertion end on the internal pipe (15). In the handgrip (36) the first rope or belt (22) is fixed to the driving system (13, 21, 27) at a second fixing point (26) of the first rope or belt.

The above-mentioned system for passing the first rope or belt (22) carries out three functions:
- using the return pulley (7) and the double passage within the internal pipe (15), it has a function of increasing the force applied by the driving system (13, 21, 27), which exerts the traction of the first rope or belt (22) to carry out the cutting action;
- using the grooves obtained on the external (14) and internal (15) pipes, it forms on the first rope or belt (22) a ring (35), which slides on the sliding plug (17) during the lengthening operation of the telescopic rod of the tool and releases the first exceeding rope or belt (22) on the side of the pipe-clamp (20), in order to make it available on the side of the driving system (13, 21, 27) so that, in such a lengthening operation of the telescopic rod, the first rope or belt (22) always remains in tension and the driving system (13, 21, 27) remains in a fixed position;
- using the grooves obtained on the external (14) and internal (15) pipes and the passage on the sliding plug (17), it forms a path of the first rope or belt (22), which avoids the presence of common features of the first rope or belt (22) back and forth with the benefit of preventing the first rope or belt (22) from overlapping during the lengthening operation of the telescopic rod and during the retracting operation of the telescopic rod of the tool.

The sliding plug (17) has (Fig. 16) a section wherein the external profile or perimeter is structured in such a way that it corresponds to the internal profile of the section of the internal pipe (15). The pipe-clamp (20) is structured so as to have a first portion (46) with internal profile identical to the external profile of the section of the external pipe (14) and a second portion (47) with internal profile identical to the external profile of the section of the internal pipe (15).

Said structures of the sliding plug (17) and of the pipe-clamp (20), with the function to keep the internal pipe (15) perfectly in the middle of the external pipe (14), prevent them from rubbing one against the other.

The driving system (13, 21, 27) is motorized by an electrical motor (21) powered by means of one or more batteries (38).

In the first embodiment (Fig. 1, Fig. 2, Fig. 3, Fig. 4, Fig. 5; Fig.12) it is provided that the one or more batteries (38) are separated with respect to the body of the lopping shear or lopper in order to limit their weight. The one or more batteries (38) are therefore connected to the body of the lopping shear or lopper by means of a connector (37), preferably placed behind the handgrip (36). For example, it may be provided that the one or more batteries (38) are placed on a special wearable support, such as for example a backpack, a vest or a belt so that their weight do not weigh on the operator's arms.

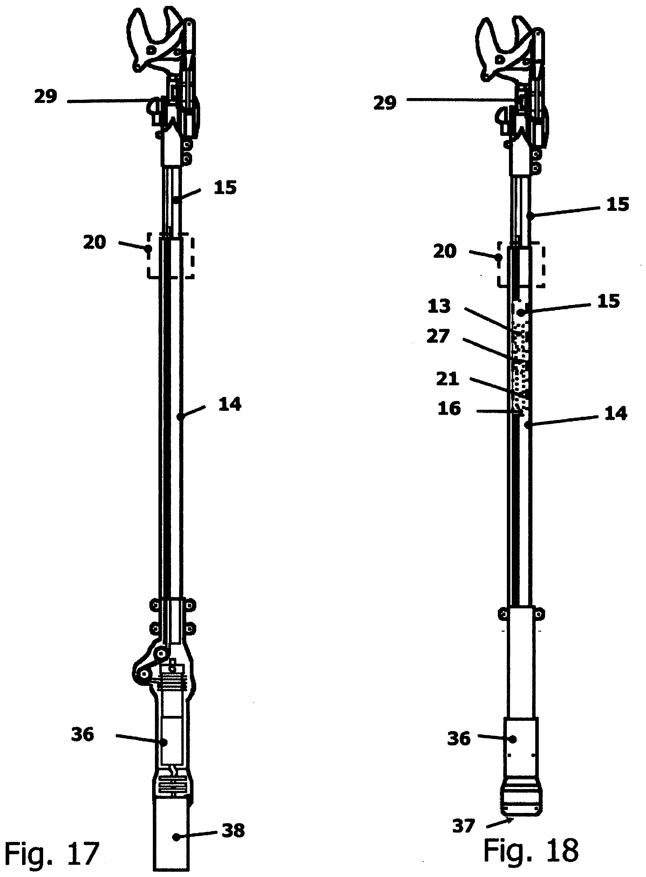

In other embodiments (Fig. 17), it may be provided that the one or more batteries (38) are integrated within the body of the lopping shear or lopper, such as, for example, within the handgrip (36) or within the volume of the telescopic rod.

In other embodiments (Fig. 18), it may be provided that the driving system (13, 21, 27) and the pruning head (29) are placed near opposite ends of the same pipe selected between external pipe (14) and internal pipe (15), for direct connection without interposition of systems for compensating the telescopic variation of length of the lopping shear or lopper. In that case, for example, the one or more batteries (38) may be placed in the handgrip, so that a greater weight balance can be obtained.

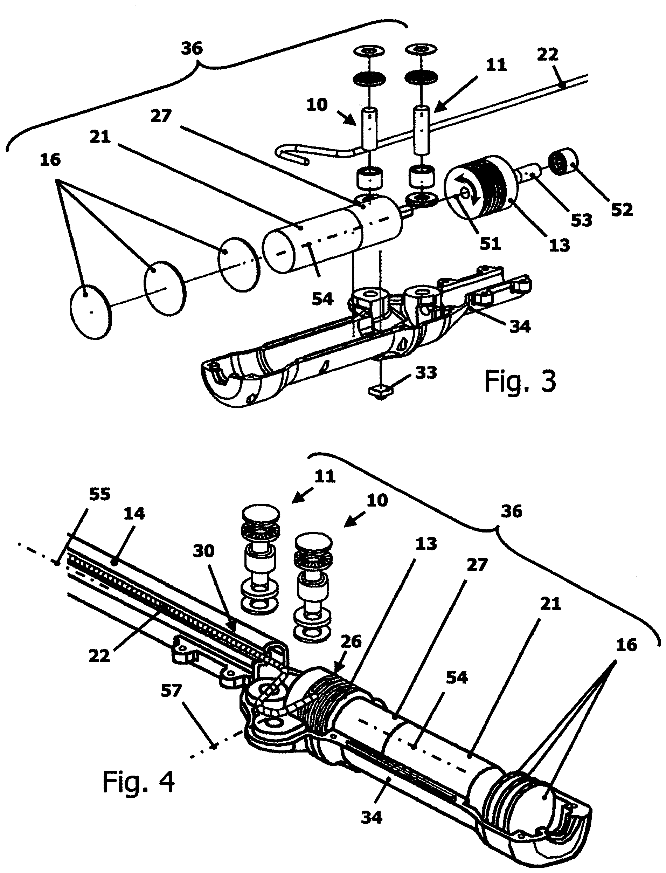

The driving system (13, 21, 27) is managed by means of one or more electronic cards (16) that are preferably placed within the handgrip (36). The handgrip (36) is preferably made (Fig. 2, Fig. 3) by means of a couple of half shells (34), which simplifies inspection, maintenance and repairing operations.

The half shells (34) may be made, for example, by means of forming in plastic material or 30% glass filled nylon and the handgrip (36) obtained in this way is fixed and closed on the telescopic rod (14, 15) of the lopping shear by means of 4 screws with nuts.

In the shown embodiment, the motor (21) is housed within the handgrip (36) and its driving occurs by means of a specific (Fig. 3) push-button (33) placed on the handgrip (36). The motor (21) is preferably coupled with a gear-reducing device (27) interposed between the motor (21) and the winding pulley (13). The motor (21) makes a winding pulley (13) rotate; on said winding pulley the first rope or belt (22) is fixed in such a way that, to one rotation of the winding pulley (13) in a first rotation direction, it corresponds a winding of the first rope or belt (22) on the winding pulley (13) and in a second rotation direction, opposite to the first rotation direction, it corresponds an unwinding of the first rope or belt (22) from the winding pulley (13). The winding of the first rope or belt (22) on the winding pulley (13) corresponds to a shortening action of the first rope or belt (22), and is translated into a traction exerted by the first rope or belt (22) on the trolley (9) which transmits in turn the traction to the second rope or belt (19), which pulls back in this way the blade (1) towards the counter-blade (2) in order to carry out the cutting action.

In order to allow the return to the reciprocal opening position of blade (1) and counter-blade (2), it has been thought an automatic procedure controlled by the one or more electronic cards (16) according to an operating mode in which, once the cutting action has been carried out, the motor (21) automatically reverses its own rotation allowing the unwinding of the first rope or belt (22), which is pulled back under the action of the spring (18) placed on the pruning head (29). The spring (18) pulls back the blade (1) towards the opening condition and consequently exerts in turn a traction of the second rope or belt (19), which pulls back the trolley (9) in position, which in turn allows the recovery of the first rope or belt (22), while it is released by the opposite action of counter-rotation of the motor (21) and of the winding pulley (13).

The winding pulley (13) can have, for example, a diameter of 40 mm. On the winding pulley (13) winding grooves are obtained to guide the winding action of the first rope or belt (22) on the winding pulley (13) itself, avoiding overlaps and knots.

Furthermore, in order to keep a compact solution of the driving system (13, 21, 27) allowing its housing within the handgrip (36) of the lopping shear or lopper, the motor (21), the possible gear-reducing device (27) and the winding pulley (13) are placed according to a longitudinal structure within the handgrip (36) and the rotation axis (51) of the winding pulley (13) is therefore parallel with respect to the traction direction of the first rope or belt (22) and consequently the direction along which the first rope or belt (22) is pulled back or released with respect to the winding pulley (13) is placed orthogonally with respect to the traction direction of the first rope or belt (22). In order to guide the first rope or belt (22) between the traction direction and the winding or unwinding direction orthogonal to it, a couple of bearings (10, 11) has been introduced, which allow to guide the first rope or belt (22). Practically the couple of bearings (10, 11) allows to change the movement axis of the first rope or belt (22) between the traction direction, longitudinally oriented with respect to the longitudinal development of the lopping shear, and the winding or unwinding direction with respect to the winding pulley (13), this winding or unwinding direction being essentially orthogonal with respect to the traction direction.

The bearings (10, 11) preferably include a first bearing (10) and a second bearing (11) guiding the passage of the first rope or belt (22) between the longitudinal direction within the telescopic rod (14, 15) and the orthogonal direction with respect to the winding pulley (13).

Each bearing (10, 11) is made (Fig. 3) by a respective roller bearing, by two thrust bearings and by two fifth wheel couplings, such elements being inserted on a respective pin having a diameter of 10 mm.

To summarize, by activating the motor (21) with the push-button (33) the motor (21), the gear-reducing device (27) and the winding pulley (13) turn counter-clockwise, the first rope or belt (22) winds on the winding pulley (13), the blade (1) closes on the counter-blade (2) carrying out the cutting. Once the cutting has been carried out, i.e. once an end-stroke position is reached, the rotation direction of the motor (21) is automatically reversed, the gear-reducing device (27) and the winding pulley (13) turning clockwise, so that the first rope or belt (22) is recovered by the spring (18) placed on the pruning head (29) of the lopping shear.

The motor (21) is provided with a respective motor shaft that couples with the gear-reducing device (27), which in turn couples with the winding pulley (13). The winding pulley (13) is fixed on the gear-reducing device (27) by means of two screws. At the opposite end of the winding pulley (13) with respect to the fixing end on the gear-reducing device (27), there is a third bearing (52), which by means of a pin (53) allows to support the driving system (13, 21, 27) avoiding an overhanging condition of the system itself and, in particular, of the winding pulley (13) which is, in this way, effectively supported on one side by the bearing (52) with a respective pin (53) and on the opposite side by the gear-reducing device (27). The first rope or belt (22) is fixed on winding pulley (13) by a knot after passing inside a hole placed on the winding pulley (13) itself.

The motor (21) is preferably of the brushless type. The preferential choice of a brushless motor is mainly due to two factors: the weight, which is lower in comparison to a DC motor of equal power, and the absence of maintenance typical of commutator motors due to the wear of brushes.

For example, it will be possible to use a motor (21), which is preferably of the brushless type, with a diameter of the motor body of 32 mm and length of 60 mm, making possible the integration within a handgrip (36) with limited sizes and easy to handle by the operator. For example, the motor can be a 36-volt-motor, rated current at about 2 amperes. The motor in no-load conditions preferably has a speed of about 12000 rounds/minute, nominal operating speed of the order of 11000 rounds/minute, nominal torque of the order of 55 mNm.

A 36-volt-motor has been chosen because, with the same power, the greater tension, with respect to other possible alternatives, allows the sliding of a minor current, which limits the dissipation on the conductors, allowing a greater battery life.

In an embodiment, a motor equipped with positioning sensors of the motor shaft may be provided, such as for example hall effect sensors; such sensors of the magnetic type being placed at 120° on the motor shaft in such a way that it is possible to detect the angular position within sectors of 60°. The control techniques of brushless motors of the type equipped with positioning sensors are suitable for this application, in which initial position and end position need to be well defined while among which high speed and torque values are required. Since this is a motor developing 12000 rounds/minute off-load, calculating the kinematics of the entire apparatus, it has been defined that a reduction ratio 1:30 could be ideal; the ratio closer to that value supplied by the manufacturer is 1:29,3, which has thus been inserted in the gearmotor system. The gear-reducing device (27) is preferably of the planetary type and it preferably has an external diameter corresponding to the motor's external diameter on which it couples and it has a length of about 41 mm. The gear-reducing device is preferably a two-stage gear device. In such a case, since the reduction ratio obtained is 1:29,3, the efficiency is around 90%. Therefore, the maximum torque that can be obtained is 0,8687 Nm x 29,3 x 90% > 20 Nm which is suitable for the specific application. Obviously different embodiments with different gearmotor systems may be provided, in order to obtain even greater torque values.

In the shown embodiment the one or more electronic cards (16) are made in the form of three circular electronic cards, but it is obvious that several further configurations are possible without going beyond the scope of the present invention. The represented solution allows to obtain various advantages, because the presence of three electronic cards allows to separate the functions on the same, allowing therefore a cheaper repair, for example in case one of the cards breaks down. Moreover, such a configuration allows to obtain a more compact configuration, allowing its application within the handgrip (36) dimensions. Furthermore, this solution allows to avoid interferences between the cards with different functions and allows a more effective heat dissipation.

The electronic control must provide three different sections for each function on the previously described three electronic cards (16): supply, control and power. The three logic separated sections on the three different cards may be overlapping one on the other and connected by means of connectors or by means of welding of the interconnection contacts. For example, a first electronic card may be an electronic control card equipped with a microcontroller. For example, the microcontroller may be a microcontroller equipped with integrated peripheral devices suitable for piloting three-phase motors, like for example the brushless motor. The implemented main functions in the microcontroller are the following.
- PWM (Pulse Width Modulation) piloting of the 3 phases of the brushless motor by means of 6 digital channels respectively handling the half wave ON and OFF of each winding;
- Digital reading of the 3 signals coming from the Hall effect sensors for the correct positioning of the electric field during the motor piloting;
- Analogic reading of the current drawn from the battery both for protection and for statistical evaluations, such as calculation of the so-called thermal image;
- Analogic reading of the tension of the battery both for protecting and limiting the operation in case of a low-tension value, i.e. with low battery;
- Analogic reading of the measured temperature on the power components, representing with a good approximation the temperature of the motor windings not directly reachable by a sensor;
- Optionally analogic or digital reading of the trigger closing/opening the blade of the apparatus during the cutting;
- Digital input of the zero position, which is represented by the completely open apparatus blade;
- Digital output to which it is possible to connect an acoustic signalling buzzer, for example to warn of the beginning of cutting phase.

For example, a second electronic card may be a supplying electronic card, which mainly creates two stabilized direct-current voltages for the correct operation of the electronic devices contained in the other two cards. For example, the tension of the batteries may be converted into a 12-volt supply voltage of by means of a switching regulator LM5007 able to produce 700 mA until an input voltage of 80V. In any case, in order to avoid break downs due to peaks usually generated on inductive loads such as motors, the input has been protected by means of a TVS diode (Transient Voltage Suppression or transients suppressor), which limits the voltage excursion to 46 volt. A precise and stable 12-volt supply voltage is necessary for the correct operation of the piloting circuits of the brushless motor windings. The passage from 12 Volts to 5 Volts occurs through a linear regulator, even because the current required by the 5-volt circuitry is of small entity, such as for example a few mA, with respect to the nominal current of the motor.

For example, a third electronic card may be an electronic power card. The main functions of this card are two.
- Correctly piloting the three windings of the brushless motor. This is implemented by means of 3 circuits with identical functions, whose characteristic component is the integrated circuit IRS21867 called Hi and Low Side Driver. With such components, PWM signals coming from the microcontroller (typically at volt levels 0-5) are properly converted in order to pilot the MOS (Metal Oxide Semiconductor) electronic switches with voltage suitable for the required operation and directly connected to the windings of the brushless motor;
- Reading the analog quantities of the system and sending the information to the microcontroller, which will use these data for their elaboration.

In particular the 3 measured quantities are the following:
- Battery voltage, through a resistive divider;
- Battery's current, through Hall effect transducer ACS712 with 40- positive or negative-ampere full-scale reading;
- Temperature of the MOS switches through sensor KTY82, a PTC, i.e. Positive Temperature Coefficient or resistance with positive temperature coefficient.

In conclusion the present invention relates to (Fig. 1, Fig. 2, Fig. 3, Fig. 4, Fig. 5) a lopping shear or lopper of the scissor type equipped with a pruning head (29) comprising (Fig.8, Fig. 9, Fig. 10, Fig. 11) a blade (1) and a counter-blade (2) in which the pruning head (29) is provided with a movement device (9, 12,19) intended to control a reciprocal closing movement of blade (1) and counter-blade (2) from an open position to a closed position for cutting a piece placed in the opening formed by blade (1) and counter-blade (1). The pruning head (29) is further provided with a return elastic means (18) for the return to the open position. The lopping shear or lopper is provided with a telescopic rod (14, 15) for telescopic variation of the length of the lopping shear or lopper. The telescopic rod (14, 15) bears on a first end the pruning head (29) and comprising near or in correspondence of the opposite end control means (33) of a driving system (13, 21, 27) of the lopping shear or lopper for the control of the movement device (9, 12, 19) intended to control the reciprocal closing movement of blade (1) and counter-blade (2).

The driving system (13, 21, 27) is connected (Fig. 1, Fig. 2, Fig. 3, Fig. 4, Fig. 5) to a first rope or belt (22) extending in a direction of longitudinal development (55) of the telescopic rod (14, 15), the first rope or belt (22) being intended to couple with the movement device (9, 12, 19) according to a configuration in which:
- A traction action applied on the first rope or belt (22) by the driving system (13, 21, 27) according to a traction direction of the movement device (9, 12, 19) corresponding to the longitudinal development direction (55) of the telescopic rod (14, 15) corresponds to
- a traction action applied by the first rope or belt (22) on the movement device (9, 12, 19) intended to control a reciprocal closing movement of blade (1) and counter-blade (2).

The operating system (13, 21, 27) includes an electrical motor (21) which is placed according to a longitudinal assembly direction (54) developing essentially parallel with respect to the longitudinal development direction (55) of the telescopic rod (14, 15), the motor (21) actuating a winding pulley (13) for winding or unwinding the first rope or belt (22) with rotation axis (51) which is parallel with respect to longitudinal assembly direction (54) and longitudinal development direction (55) of the telescopic rod (14, 15). The winding direction (57) of the first rope or belt (22) is inclined with respect to the longitudinal development direction (55) of the telescopic rod (14, 15). The driving system (13, 21, 27) further comprises return means (10, 11) for return in a guided condition of the first rope or belt (22) with variation of said traction direction applied on the first rope or belt (22) from a parallel condition with respect to the longitudinal development direction (55) of the telescopic rod (14, 15) to a direction corresponding to the winding direction (57) of the first rope or belt (22) on the winding pulley (13).

The inclination between the traction direction applied on the first rope or belt (22) and the direction corresponding to the winding direction (57) of the first rope or belt (22) is between 75 and 105 degrees, preferably essentially orthogonal.

The return means (10, 11) for return of the first rope or belt (22) include at least one first bearing (10) which is placed in a proximity condition with the winding pulley (13) and having an axis of the bearing (56) essentially orthogonal with respect to the longitudinal development direction (55) of the telescopic rod (14, 15), the first rope or belt (22) being placed in a condition passing around the first bearing (10) which constitutes a first element of return and of variation of a movement direction of the first rope or belt (22) between:
- the traction direction of the movement device (9, 12, 19) which is oriented longitudinally with respect to the longitudinal development direction (55) of the telescopic rod (14, 15)
   and
- the winding or unwinding direction (57) with respect to the winding pulley (13).

In an embodiment the driving system (13, 21, 27) further includes (Fig. 5) a second bearing (11) having an axis of the bearing (56) orthogonal with respect to the longitudinal development direction (55) of the telescopic rod (14, 15), the second bearing (11) being placed spaced with respect to the first bearing (10), the first rope or belt (22) being placed in a condition passing around the first bearing (10) which constitutes said first element of return and of variation of a movement direction of the first rope or belt (22) between:
- the traction direction of the movement device (9, 12, 19)
   and
- the winding or unwinding direction with respect to the winding pulley (13) the first rope or belt (22) being placed in a condition passing around the second bearing (11) which constitutes a second element of return and of variation of the movement direction of the first rope or belt (22) for alignment of the first rope or belt (22) with respect to a passing internal hollow of the telescopic rod (14, 15).

The present invention also relates to a control method of a lopping shear or lopper of the scissor type provided with a pruning head (29) comprising a blade (1) and a counter-blade (2) supported by a blade-support (3) placed on a support (8) of the pruning head (29), in which the pruning head (29) is provided with a movement device (9, 12, 19) intended to control a reciprocal closing movement of blade (1) and counter-blade (2) from an open position to a closed position for cutting a piece placed in the opening formed by blade (1) and counter-blade (2), the pruning head (29) being further provided with a return elastic mean (18) for the return to the open position, the lopping shear or lopper being provided with a rod (14, 15) bearing on its first end the pruning head (29) and comprising near or in correspondence of an opposite end control means (33) of a driving system (13, 21, 27) of the lopping shear or lopper for the control of the movement device (9, 12, 19), in which the driving system (13, 21, 27) is connected to a first rope or belt (22) extending in a direction of longitudinal development (55) of the telescopic rod (14, 15), the first rope or belt (22) being intended to couple with the movement device (9, 12, 19) according to a configuration in which:
- a traction action applied on the first rope or belt (22) by the driving system (13, 21, 27) according to a traction direction of the movement device (9, 12, 19) corresponding to the longitudinal development direction (55) of the telescopic rod (14,15) corresponds to
- a traction action applied by the first rope or belt (22) on the movement device (9, 12, 19) intended to control a reciprocal closing movement of blade (1) and counter-blade (2),
in which
the driving system (13, 21, 27) includes an electrical motor (21) which is placed according to a longitudinal assembly direction (54) developing essentially parallel with respect to the longitudinal development direction (55) of the telescopic rod (14, 15), the motor (21) actuating a winding pulley (13) for winding or unwinding the first rope or belt (22) with a rotation axis (51) which is parallel with respect to longitudinal assembly direction (54) and longitudinal development direction (55) of the telescopic rod (14, 15), the driving system (13, 21, 27) further comprising at least one first bearing (10) which is placed in proximity condition with the winding pulley (13) and having an axis of the bearing (56) orthogonal with respect to the longitudinal development direction (55) of the telescopic rod (14, 15), the first rope or belt (22) being placed in a condition passing around the first bearing (10) which constitutes a first element of return and of variation of a movement direction of the first rope or belt (22) between:
- the traction direction of the movement device (9, 12, 19) which is oriented longitudinally with respect to the longitudinal development direction (55) of the telescopic rod (14, 15)
   and
- a winding or unwinding direction with respect to the winding pulley (13), this winding or unwinding direction being essentially orthogonal with respect to the traction direction;
the method comprising the following steps:
a) activation of the electrical motor (21) in rotation for pulling the first rope or belt (22) for cutting action;
b) detection of the end of the cutting action;
c) activation of the electrical motor (21) in counter rotation for releasing the first rope
or belt (22) which is pulled back by the return action of the elastic means.

The description of the present invention has been made with reference to the enclosed figures in a preferred embodiment, but it is evident that many possible changes, modifications and variations will be immediately clear to those skilled in the art in the light of the foregoing description. Thus, it should be understood that the invention is not limited to the foregoing description, but embraces all such changes, modifications and variations in accordance with the appended claims.

### NOMENCLATURE USED

With reference to the identification numbers reported in the enclosed figures, the following nomenclature has been used:
1. Blade
2. Counter-blade
3. Blade-support
4. First wheel
5. Second wheel
6. Blocking means
7. Return pulley
8. Support
9. Trolley
10. First bearing
11. Second bearing
12. Tie-rod
13. Winding pulley
14. External pipe
15. Internal pipe
16. Electronic card
17. Sliding plug
18. Elastic means or spring
19. Second rope or second belt
20. Pipe-clamp
21. Motor
22. First rope or first belt
23. First fixing point of the second rope or belt
24. Second fixing point of the second rope or belt
25. First fixing point of the first rope or belt
26. Second fixing point of the first rope or belt
27. Gear-reducing device
28. Hole
29. Pruning head
30. First groove
31. Second groove
32. Third groove
33. Push-button
34. Half shell
35. Ring
36. Handgrip
37. Connector
38. Battery
39. Hooking point
40. Internal wheel
41. Arm
42. Coupling axis
43. Teeth
44. First seat
45. Second seat
46. First portion
47. Second portion
48. Releasable fixing means
49. Crossing passage
50. Eyelet
51. Rotation axis
52. Third bearing
53. Pin
54. Longitudinal assembly direction
55. Longitudinal development direction
56. Bearing axis
57. Winding direction

## Claims

1. Lopping shear or lopper of the scissor type provided with a pruning head (29) comprising a blade (1) and a counter-blade (2) which are supported by a blade-support (3) placed on a support (8) of the pruning head (29), in which the pruning head (29) is provided with a movement device (9, 12, 19) intended to control a reciprocal closing movement of blade (1) and counter-blade (2) from an open position to a closed position for cutting a piece placed in the opening formed by blade (1) and counter-blade (2), the pruning head (29) being further provided with a return elastic means (18) for the return to the open position, the lopping shear or lopper being provided with a telescopic rod (14, 15) for telescopic variation of the length of the lopping shear or lopper, the telescopic rod (14, 15) bearing on a first end the pruning head (29) and comprising near or in correspondence of an opposite end control means (33) of a driving system (13, 21, 27) of the lopping shear or lopper for the control of the movement device (9, 12, 19), in which the driving system (13, 21, 27) is connected to a first rope or belt (22) extending in a direction of longitudinal development (55) of the telescopic rod (14, 15), the first rope or belt (22) being intended to couple with the movement device (9, 12, 19) according to a configuration in which:
- a traction action applied on the first rope or belt (22) by the driving system (13, 21, 27) according to a traction direction of the movement device (9, 12, 19) corresponding to the longitudinal development direction (55) of the telescopic rod (14, 15) corresponds to
- a traction action applied by the first rope or belt (22) on the movement device (9, 12, 19) intended to control a reciprocal closing movement of blade (1) and counter-blade (2),
**characterized in that**
the driving system (13, 21, 27) includes an electrical motor (21) which is placed according to a longitudinal assembly direction (54) developing essentially parallel with respect to the longitudinal development direction (55) of the telescopic rod (14, 15), the motor (21) being connected for actuation to a winding pulley (13) for winding or unwinding the first rope or belt (22) with a rotational axis (51) which is parallel with respect to longitudinal assembly direction (54) and longitudinal development direction (55) of the telescopic rod (14, 15) in which a winding direction (57) of the first rope or belt (22) is inclined with respect to the longitudinal development direction (55) of the telescopic rod (14, 15), the driving system (13, 21, 27) further comprising return means (10, 11) for return in a guided condition of the first rope or belt (22) with variation of said traction direction applied on the first rope or belt (22) from a parallel condition with respect to the longitudinal development direction (55) of the telescopic rod (14, 15) to a direction corresponding to the winding direction (57) of the first rope or belt (22) on the winding pulley (13).

2. Lopping shear or lopper according to the previous claim **characterized in that** the inclination between said traction direction applied on the first rope or belt (22) and said direction corresponding to the direction of winding (57) of the first rope or belt (22) is between 75 and 105 degrees.

3. Lopping shear or lopper according to the previous claim **characterized in that** the inclination between said traction direction applied on the first rope or belt (22) and said direction corresponding to the direction of winding (57) of the first rope or belt (22) is essentially orthogonal.

4. Lopping shear or lopper according to any of the previous claims **characterized in that** the return means (10, 11) for return in a guided condition of the first rope or belt (22) include at least one first bearing (10) which is placed in a proximity condition with the winding pulley (13) and having an axis of the bearing (56) essentially orthogonal with respect to the longitudinal development direction (55) of the telescopic rod (14, 15), the first rope or belt (22) being placed in a condition passing around the first bearing (10) which constitutes a first element of return and of variation of a movement direction of the first rope or belt (22) between:
- the traction direction of the movement device (9, 12, 19) which is oriented longitudinally with respect to the longitudinal development direction (55) of the telescopic rod (14, 15)
and
- the winding or unwinding direction (57) with respect to the winding pulley (13).

5. Lopping shear or lopper according to the previous claim **characterized in that** the return means (10, 11) for return in a guided condition of the first rope or belt (22) further include a second bearing (11) having an axis of the bearing (56) orthogonal with respect to the longitudinal development direction (55) of the telescopic rod (14, 15), the second bearing (11) being placed spaced with respect to the first bearing (10), the first rope or belt (22) being placed in a condition passing around the first bearing (10) which constitutes said first element of return and of variation of a movement direction of the first rope or belt (22) between:
- the traction direction of the movement device (9, 12, 19)
and
- the winding or unwinding direction with respect to the winding pulley (13) the first rope or belt (22) being placed in a condition passing around the second bearing (11) which constitutes a second element of return and of variation of the movement direction of the first rope or belt (22) for alignment of the first rope or belt (22) with respect to a passage internal hollow of the telescopic rod (14, 15).

6. Lopping shear or lopper according to the previous claim **characterized in that** the motor (21) is a motor with an operating nominal speed of about 11000 turns/minute, nominal couple of about 55 mNm.

7. Lopping shear or lopper according to any of the previous claims **characterized in that** the driving system (13, 21, 27) further includes a gear-reducing device (27) interposed between the motor (21) and the winding pulley (13).

8. Lopping shear or lopper according to the previous claim **characterized in that** the gear-reducing device (27) has a reduction ratio of about 1:30.

9. Lopping shear or lopper according to any of the previous claims **characterized in that** it includes one or more batteries (38) for power supply of the motor (21).

10. Lopping shear or lopper according to the previous claim **characterized in that** the one or more batteries (38) are separated with respect to the body of the lopping shear or lopper and are connected to the body of the lopping shear or lopper by means of a connector (37).

11. Lopping shear or lopper according to the previous claim **characterized in that** the one or more batteries (38) are placed on a support which is wearable by an operator.

12. Lopping shear or lopper according to claim 9 **characterized in that** the one or more batteries (38) are integrated within the body of the lopping shear or lopper.

13. Lopping shear or lopper according to any of the previous claims **characterized in that** the telescopic rod (14, 15) includes an external pipe (14) within which in a slidable way an internal pipe (15) is applied the extraction of which from the external pipe (14) allows a lengthening of the telescopic rod and the insertion of which inside the external pipe (14) allows a shortening of the telescopic rod, for adjustment of a cutting height of the lopping shear or lopper, the lopping shear or lopper comprising a pipe-clamp (20) intended for releasing and blocking the reciprocal sliding of external pipe (14) and internal pipe (15).

14. Lopping shear or lopper according to the previous claim **characterized in that** the driving system (13, 21, 27) is placed near a second final end of the telescopic rod (14, 15) opposite with respect to the first end of the telescopic rod (14, 15) bearing the pruning head (29), the driving system (13, 21, 27) being placed within a handle (36), the lopping shear or lopper comprising a return system of the first rope or belt (22) for compensation of the telescopic variation of length of the lopping shear or lopper, the return system defining a path of the first rope or belt (22) which is configured in such a way as to allow the reciprocal telescopic extension between internal pipe (15) and external pipe (14) maintaining fixed the position of the driving system (13, 21, 27).

15. Lopping shear or lopper according to the previous claim **characterized in that** the pruning head (29) is placed on the first end of the telescopic rod (14, 15) by means of fixing on the internal pipe (15) and the driving system (13, 21, 27) is placed on the second end of the telescopic rod (14, 15) within the handle (36) fixed on the external pipe (14), the return system of the first rope or belt (22) for compensation of the telescopic variation of length of the lopping shear or lopper comprising:
- a series of grooves (30, 31, 32) obtained on external pipe (14) and internal pipe (15) according to a configuration in which the internal pipe (15) includes a first groove (32) and a second groove (31) and in which the external pipe (14) includes a third groove (30);
- a sliding plug (17) provided with a crossing passage (49) intended to be applied on the internal pipe (15) on the end of the internal pipe (15) opposite with respect to the end bearing the pruning head (29);
- an eyelet (50) obtained on the internal pipe (15) along one of the grooves obtained on the internal pipe (15);
the path of the first rope or belt (22) defined by the return system being such that:
- the first rope or belt (22) is fixed in a first fixing point (25) of the first rope or belt which is near the pipe-clamp (20);
- the first rope or belt (22) passes externally to the internal pipe (15) under the pipe-clamp (20) with an arrangement placed within the first groove (32) and passes along the first groove (32) in an opposite direction with respect to the direction oriented towards the application position of the pruning head (29) until it reaches the corresponding final end of the internal pipe (15);
- near this final end of the internal pipe (15), the first rope or belt (22) is folded with formation of a loop (35) and the first rope or belt (22) internally enters the internal pipe (15) going back in a direction opposite to the direction along which it passed within the first groove (32), the passage between the exterior of the internal pipe (15) from the first groove (32) towards the internal side of the pipe (15) occurring in a guided way by means of the sliding plug (17) by means of a passage of the first rope or belt (22) through the crossing passage (49);
- the first rope or belt (22) passes inside the internal pipe (15) until it exits outside from the internal pipe (15) at the application position of the pruning head (29) for engagement with the movement device (9, 12,19) intended to control the reciprocal closing movement of blade (1) and counter-blade (2), the movement device (9, 12,19) being provided with a return pulley (7) which allows to send back the first rope or belt (22);
- the first rope or belt (22) sent back by the return pulley (7) passes inside the internal pipe (15) in the opposite direction with respect to the direction oriented towards the application position of the pruning head (29);
- after having passed through a portion of length inside the internal pipe (15), the first rope or belt (22) exits from the internal pipe (15) through the eyelet (50) obtained within the sliding and guiding seat defined by the second groove (31) of the internal pipe (15)
- near the pipe-clamp (20), the first rope or belt (22) passes under the pipe-clamp (20) in a slidable way and continues its path within the third groove (30) that is present on the external pipe (14) until it penetrates inside the handle (36) which is applied at the final end of the external pipe (14) opposite with respect to the insertion end on the internal pipe (15);
- inside the handle (36) the first rope or belt (22) is fixed to the driving system (13, 21, 27) at a second fixing point (26) of the first rope or belt.

16. Lopping shear or lopper according to the previous claim **characterized in that** the return pulley (7) of the first rope or belt (22) is placed on a traction trolley (9) which is slidable inside the internal pipe (15), the trolley (9) being intended for the transfer to the pruning head (29) of the traction action applied by the driving system (13, 21, 27) on the first rope or belt (22).

17. Lopping shear or lopper according to any of the previous claims **characterized in that** the movement device (9, 12, 19) intended to control the reciprocal closing movement of blade (1) and counter-blade (2) includes a second traction rope or belt (19) which is placed through a reduction system of the force comprising an internal wheel (40) which is placed within a housing of the support (8) of the pruning head (29), the internal wheel (40) comprising a first wheel (4) and a second wheel (5) integral with each other and having different diameters, the second rope or belt (19) being wound on the first wheel (4) having a greater diameter and applying the driving traction following unwinding from the first wheel (4) and corresponding winding on the second wheel (5) having a lower diameter with respect to the diameter of the first wheel (4).

18. Lopping shear or lopper according to the previous claim and according to claim 16 **characterized in that**
the second traction rope or belt (19) is fixed to the trolley (9) at one side and to one between blade (1) and counter-blade (2) at the opposite side.

19. Lopping shear or lopper according to the previous claim **characterized in that** the second traction rope or belt (19) is fixed to one between blade (1) and counter-blade (2) with interposition of a fixing tie-rod (12).

20. Lopping shear or lopper according to any of the previous claims **characterized in that** the counter-blade (2) is integral with the blade-support (3) and the blade (1) is rotatable on a hinging point with respect to the counter-blade (2).

21. Lopping shear or lopper according to the previous claim and according to claim 17 **characterized in that**
the second traction rope or belt (19) is fixed to the trolley (9) at one side and to the blade (1) at the other side.

22. Lopping shear or lopper according to the previous claim **characterized in that** the blade (1) is provided with an extension arm (41) at which the fixing of the second traction rope or belt (19) occurs, the arm (41) constituting an operating lever of the blade (1).

23. Lopping shear or lopper according to any of the previous claims **characterized in that** the return elastic means (18) is a spring.

24. Lopping shear or lopper according to any of the previous claims **characterized in that** the pruning head (29) is orientable by rotation of the blade-support (3) with respect to the support (8).

25. Lopping shear or lopper according to claim 13 **characterized in that** the driving system (13, 21, 27) and the pruning head (29) are placed at opposite ends of the same pipe selected between external pipe (14) and internal pipe (15), for direct connection without interposition of compensation systems for compensating the telescopic variation of length of the lopping shear or lopper.

26. Control method of a lopping shear or lopper of the scissor type provided with a pruning head (29) comprising a blade (1) and a counter-blade (2) supported by a blade-support (3) placed on a support (8) of the pruning head (29), in which the pruning head (29) is provided with a movement device (9, 12, 19) intended to control a reciprocal closing movement of blade (1) and counter-blade (2) from an open position to a closed position for cutting a piece placed in the opening formed by blade (1) and counter-blade (2), the pruning head (29) being further provided with a return elastic means (18) for the return to the open position, the lopping shear or lopper being provided with a telescopic rod (14, 15) bearing the pruning head (29) on its first end and comprising nearby or at an opposite end control means (33) of a driving system (13, 21, 27) of the lopping shear or lopper for the control of the movement device (9, 12, 19), in which the driving system (13, 21, 27) is connected to a first rope or belt (22) extending in a direction of longitudinal development (55) of the telescopic rod (14, 15), the first rope or belt (22) being intended to couple with the movement device (9, 12, 19) according to a configuration in which:
- a traction action applied on the first rope or belt (22) by the driving system (13, 21, 27) according to a traction direction of the movement device (9, 12, 19) corresponding to the longitudinal development direction (55) of the telescopic rod (14, 15) corresponds to
- a traction action applied by the first rope or belt (22) on the movement device (9, 12,19) intended to control a reciprocal closing movement of blade (1) and counter-blade (2),
in which
the driving system (13, 21, 27) includes an electrical motor (21) which is placed according to a longitudinal assembly direction (54) developing essentially parallel with respect to the longitudinal development direction (55) of the telescopic rod (14, 15), the motor (21) being connected for actuation to a winding pulley (13) for winding or unwinding the first rope or belt (22) with a rotational axis (51) which is parallel with respect to longitudinal assembly direction (54) and longitudinal development direction (55) of the telescopic rod (14, 15), the driving system (13, 21, 27) further comprising at least one first bearing (10) placed in a proximity condition with the winding pulley (13) and having an axis of the bearing (56) orthogonal with respect to the longitudinal development direction (55) of the telescopic rod (14, 15), the first rope or belt (22) being placed in a condition passing around the first bearing (10) which constitutes a first element of return and of variation of a movement direction of the first rope or belt (22) between:
- the traction direction of the movement device (9, 12, 19) which is oriented longitudinally with respect to the longitudinal development direction (55) of the telescopic rod (14, 15)
and
- a winding or unwinding direction with respect to the winding pulley (13), this winding or unwinding direction being essentially orthogonal with respect to the traction direction;
the method comprising the following steps:
a) activation of the electrical motor (21) in rotation for pulling the first rope or belt (22) for cutting action;
b) detection of the end of the cutting action;
c) activation of the electrical motor (21) in counter rotation for releasing the first rope or belt (22) from the winding pulley (13), the first rope or belt (22) being pulled back by the return action of the elastic means.

## Patentansprüche

1. Baumschere oder Astschere vom Scherentyp mit Scherenkopf (29), der eine Klinge (1) und eine Gegenklinge (2) umfasst, die von einem Klingenträger (3) getragen werden, die auf einer Halterung (8) des Scherenkopfs (29) angeordnet ist, wobei der Scherenkopf (29) mit einer Bewegungsvorrichtung (9, 12, 19) versehen ist, die dazu bestimmt ist, eine wechselseitige Schließbewegung der Klinge (1) und der Gegenklinge (2) von einer offenen Position in eine geschlossene Position zu steuern, zum Schneiden eines Stücks, das in die durch Klinge (1) und Gegenklinge (2) gebildete Öffnung angeordnet wird, wobei der Scherenkopf (29) ferner mit einem elastischen Rückführmittel (18) für die Rückführung in die offene Position versehen ist, wobei die Baumschere oder Astschere mit einer Teleskopstange (14, 15) zur teleskopischen Längenänderung der Baumschere oder Astschere versehen ist, wobei die Teleskopstange (14, 15) an einem ersten Ende den Scherenkopf (29) trägt und nahe oder in Übereinstimmung mit einem gegenüberliegenden Ende Steuermittel (33) eines Antriebssystems (13, 21, 27) der Baumschere oder Astschere für die Steuerung der Bewegungsvorrichtung (9, 12, 19) umfasst, wobei das Antriebssystem (13, 21, 27) mit einem ersten Seil oder Riemen (22) verbunden ist, das sich entlang einer Längsentwicklungsrichtung (55) der Teleskopstange (14, 15) erstreckt, wobei das erste Seil oder Riemen (22 ) mit der Bewegungsvorrichtung (9, 12, 19) gemäß einer Konfiguration gekoppelt werden kann, in der:
- eine Zugwirkung die auf dem ersten Seil oder Riemen (22) durch das Antriebssystem (13, 21, 27) angewandt wird gemäß einer Zugrichtung der Bewegungsvorrichtung (9, 12, 19) entsprechend der Längsausdehnungsrichtung (55) der Teleskopstange (14,15)
- einer Zugwirkung, die durch das erste Seil oder Riemen (22) auf die Bewegungsvorrichtung (9, 12, 19) ausgeübt wird, die dazu bestimmt ist, eine wechselseitige Schließbewegung von Klinge (1) und Gegenklinge (2) zu steuern, entspricht
**dadurch gekennzeichnet, dass**
das Antriebssystem (13, 21, 27) einen Elektromotor (21) enthält, der gemäß einer Längsmontagerichtung (54) angeordnet ist, die sich im Wesentlichen parallel zu der Längsausdehnungsrichtung (55) der Teleskopstange (14, 15) entwickelt, das der Motor (21) mit einer Wickelrolle (13) zum Auf- oder Abwickeln des ersten Seils oder Riemens (22) mit Rotationsachse (51) verbunden ist, die parallel zur Längsmontagerichtung (54) und Längsausdehnungsrichtung (55) der Teleskopstange (14, 15) ist, in der eine Wickelrichtung (57) des ersten Seils oder Riemens (22) gegenüber der Längsausdehnungsrichtung (55) der Teleskopstange (14, 15) geneigt ist, das Antriebssystem (13, 21, 27) ferner Rückführmittel (10, 11) zum Rückführen des ersten Seils oder Riemens (22) mit Änderung der auf das erste Seil oder Riemen (22) ausgeübten Zugrichtung in einen geführten Zustand umfasst, von einem parallelen Zustand in Bezug auf die Längsausdehnungsrichtung (55) der Teleskopstange (14, 15) in eine Richtung, die der Aufwickelrichtung (57) des ersten Seils oder Riemens (22) auf der Aufwickelrolle (13) entspricht.

2. Baumschere oder Astschere nach dem vorhergehenden Anspruch **dadurch gekennzeichnet, dass**
die Neigung zwischen der auf das erste Seil oder Riemen (22) ausgeübten Traktionsrichtung und der Richtung, die der Wickelrichtung (57) des ersten Seils oder Riemens (22) entspricht, zwischen 75 und 105 Grad liegt.

3. Baumschere oder Astschere nach dem vorhergehenden Anspruch **dadurch gekennzeichnet, dass**
die Neigung zwischen der auf das erste Seil oder Riemen (22) ausgeübten Traktionsrichtung und der Richtung, die der Wickelrichtung (57) des ersten Seils oder Riemens (22) entspricht, im Wesentlichen orthogonal ist.

4. Baumschere oder Astschere nach einem der vorhergehenden Ansprüche **dadurch gekennzeichnet, dass**
die Rückführmittel (10, 11) zum Rückführen des ersten Seils oder Riemens (22) in einen geführten Zustand mindestens ein erstes Lager (10) umfassen, das in einem nahen Zustand mit der Wickelrolle (13) angeordnet ist und eine Achse des Lagers (56) aufweist, die im Wesentlichen orthogonal in Bezug auf die Längsausdehnungsrichtung (55) der Teleskopstange (14, 15) ist, wobei das erste Seil oder Riemen (22) in einem Zustand angeordnet ist, in dem es um das erste Lager läuft (10), das ein erstes Rückführ- und Änderungselement einer Bewegungsrichtung des ersten Seils oder Riemens (22) bildet zwischen:
- der Zugrichtung der Bewegungsvorrichtung (9, 12, 19), die längs zur Längsausdehnungsrichtung (55) der Teleskopstange (14, 15) orientiert ist
und
- der Auf- oder Abwickelrichtung (57) in Bezug auf die Aufwickelrolle (13).

5. Baumschere oder Astschere nach dem vorhergehenden Anspruch **dadurch gekennzeichnet, dass**
die Rückführmittel (10, 11) zum Rückführen des ersten Seils oder Riemens (22) in einen geführten Zustand ferner ein zweites Lager (11) umfassen, das eine Achse des Lagers (56) orthogonal in Bezug auf die Längsausdehnungsrichtung (55) der Teleskopstange (14, 15) aufweist, wobei das zweite Lager (11) in Bezug auf das erste Lager (10) beabstandet angeordnet ist, das erste Seil oder Riemen (22) in einem um das erste Lager (10) verlaufenden Zustand angeordnet ist, das das erste Rückführ- und Änderungselement einer Bewegungsrichtung des ersten Seils oder Riemens (22) bildet zwischen:
- der Zugrichtung der Bewegungsvorrichtung (9, 12,19)
und
- der Auf- oder Abwickelrichtung in Bezug auf die Aufwickelrolle (13) wobei das erste Seil oder Riemen (22) in einem Zustand angeordnet ist, der um das zweite Lager (11) läuft, das ein zweites Rückführ- und Änderungselement der Bewegungsrichtung des ersten Seils oder Riemens (22) zum Ausrichten des ersten Seils oder Riemens (22) bildet in Bezug auf einen inneren Durchgangshohlraum der Teleskopstange (14, 15).

6. Baumschere oder Astschere nach dem vorhergehenden Anspruch **dadurch gekennzeichnet, dass**
der Motor (21) ein Motor mit einer Betriebsnenndrehzahl von etwa 11.000 Umdrehungen/Minute, ein Nenndrehmoment von etwa 55 mNm ist.

7. Baumschere oder Astschere nach einem der vorhergehenden Ansprüche **dadurch gekennzeichnet, dass**
das Antriebssystem (13, 21, 27) ferner eine Getriebevorrichtung (27) aufweist, die zwischen dem Motor (21) und der Aufwickelrolle (13) angeordnet ist.

8. Baumschere oder Astschere nach dem vorhergehenden Anspruch **dadurch gekennzeichnet, dass**
die Getriebevorrichtung (27) ein Untersetzungsverhältnis von etwa 1:30 hat.

9. Baumschere oder Astschere nach einem der vorhergehenden Ansprüche **dadurch gekennzeichnet, dass**
sie eine oder mehrere Batterien (38) zur Energieversorgung des Motors (21) enthält.

10. Baumschere oder Astschere nach dem vorhergehenden Anspruch **dadurch gekennzeichnet, dass**
die eine oder mehreren Batterien (38) in Bezug auf den Körper der Baumschere oder Astschere getrennt sind und mit dem Körper der Baumschere oder Astschere mittels eines Verbinders (37) verbunden sind.

11. Baumschere oder Astschere nach dem vorhergehenden Anspruch **dadurch gekennzeichnet, dass**
die eine oder mehreren Batterien (38) auf einem Träger angeordnet sind, der von einem Bediener getragen werden kann.

12. Baumschere oder Astschere nach Anspruch 9 **dadurch gekennzeichnet, dass** die eine oder mehreren Batterien (38) in den Körper der Baumschere oder Astschere integriert sind.

13. Baumschere oder Astschere nach einem der vorhergehenden Ansprüche **dadurch gekennzeichnet, dass**
die Teleskopstange (14, 15) ein Außenrohr (14) enthält, in dem verschiebbar ein Innenrohr (15) angebracht ist, dessen Herausziehen aus dem Außenrohr (14) ein Verlängern der Teleskopstange ermöglicht und deren Einsetzen in das Außenrohr (14) ein Verkürzen der Teleskopstange zum Einstellen einer Schnitthöhe der Baumschere oder Astschere ermöglicht, wobei die Baumschere oder Astschere eine Rohrklemme (20) umfasst, die zum Lösen und Blockieren des gegenseitigen Gleitens von Außenrohr (14) und Innenrohr (15) bestimmt ist.

14. Baumschere oder Astschere nach einem der vorhergehenden Ansprüche **dadurch gekennzeichnet, dass**
das Antriebssystem (13, 21, 27) nahe eines zweiten letzten Endes der Teleskopstange (14, 15) angeordnet ist, das in Bezug auf das erste Ende der Teleskopstange (14, 15), die den Scherenkopf (29) trägt, gegenüberliegt, wobei das Antriebssystem (13, 21, 27) in einem Griff (36) angeordnet ist, wobei die Baumschere oder Astschere ein Rückführsystem des ersten Seils oder Riemens (22) zum Ausgleich der teleskopischen Längenänderung der Baumschere oder Astschere umfasst, wobei das Rückführsystem einen Weg des ersten Seils oder Riemens (22) definiert, der so konfiguriert ist, dass er ein gegenseitiges teleskopisches Ausfahren zwischen dem Innenrohr (15) und dem Außenrohr (14) ermöglicht, während die Position des Antriebssystems (13, 21, 27) fixiert bleibt.

15. Baumschere oder Astschere nach einem der vorhergehenden Ansprüche **dadurch gekennzeichnet, dass**
der Scherenkopf (29) am ersten Ende der Teleskopstange (14, 15) durch Befestigungsmittel am Innenrohr (15) angeordnet wird und das Antriebssystem (13, 21, 27) am zweiten Ende der Teleskopstange (14, 15) innerhalb des am Außenrohr (14) befestigten Griffs (36) angeordnet ist, wobei das Rückführsystem des ersten Seils oder Riemens (22) zum Ausgleich der teleskopischen Längenänderung der Baumschere oder Astschere Folgendes umfasst:
- eine Reihe von Nuten (30, 31, 32), die am Außenrohr (14) und Innenrohr (15) gemäß einer Konfiguration erhalten werden, bei der das innenrohr (15) eine erste Nut (32) und eine zweite Nut (31) enthält und bei der das Außenrohr (14) eine dritte Nut (30) enthält;
- einen Schiebestopfen (17), der mit einem Querdurchgang (49) versehen ist, der dazu bestimmt ist, an dem Innenrohr (15) an dem Ende des Innenrohrs (15) angebracht zu werden, das in Bezug auf das den Scherenkopf (29) tragende Ende entgegengesetzt ist;
- eine Öse (50), die an dem Innenrohr (15) entlang einer der Nuten erhalten wird, die an dem Innenrohr (15) erhalten werden;
wobei der Weg des ersten Seils oder Riemens (22), der durch das Rückführsystem definiert ist, so ist, dass:
- das erste Seil oder Riemen (22) an einem ersten Befestigungspunkt (25) des ersten Seils oder Riemens befestigt ist, der sich nahe der Rohrklemme (20) befindet;
- das erste Seil oder Riemen (22) extern zum Innenrohr (15) unter der Rohrklemme (20) mit einer innerhalb der ersten Nut (32) angeordneten Anordnung verläuft und entlang der ersten Nut (32) in einer entgegengesetzten Richtung bezüglich der auf die Ansetzposition ausgerichteten Richtung des Scherenkopfs (29) bis zum Erreichen des entsprechenden letzten Ende des Innenrohres (15) verläuft;
- nahe dieses letzten Endes des Innenrohrs (15) das erste Seil oder Riemen (22) unter Bildung einer Schlaufe (35) gefaltet wird und das erste Seil oder Riemen (22) intern in das Innenrohr (15) zurück in einer Richtung entgegengesetzt zu der Richtung tritt, entlang der es innerhalb der ersten Nut (32) hindurchgegangen ist, wobei der Durchgang zwischen dem Äußeren des Innenrohrs (15) von der ersten Nut (32) zur Innenseite des Rohrs (15) auf geführte Weise mittels des Schiebestopfens (17) mittels eines Durchgangs des ersten Seils oder Riemens (22) durch den Querdurchgang (49) erfolgt;
- das erste Seil oder Riemen (22) innerhalb des Innenrohrs (15) verläuft, bis es an der Einsatzposition des Scherenkopfs (29) aus dem Innenrohr (15) nach außen tritt, um mit der Bewegungsvorrichtung (9, 12, 19) in Eingriff zu kommen, um die wechselseitige Schließbewegung von Klinge (1) und Gegenklinge (2) zu steuern, wobei die Bewegungsvorrichtung (9, 12, 19) mit einer Umlenkrolle (7) versehen ist, die es ermöglicht, das erste Seil oder Riemen ( 22) zurückzuführen;
- das erste Seil oder Riemen (22), der von der Umlenkrolle (7) zurückgeführt wird, innerhalb des Innenrohrs (15) in der entgegengesetzten Richtung in Bezug auf die Richtung verläuft, die auf die Einsatzposition des Scherenkopfs (29) ausgerichtet ist;
- nachdem ein Längenabschnitt innerhalb des Innenrohrs (15) durchlaufen wurde, das erste Seil oder Riemen (22) aus dem Innenrohr (15) durch die Öse (50) austritt, die innerhalb des Gleit- und Führungssitzes erhalten wird, der durch die zweite Nut (31) des Innenrohrs (15) definiert wird;
- nahe der Rohrklammer (20) das erste Seil oder Riemen (22) verschiebbar unter der Rohrklammer (20) hindurch verläuft und seinen Weg innerhalb der dritten Nut (30) fortsetzt, die auf dem Außenrohr (14) vorhanden ist, bis es in das Innere des Griffs (36) eindringt, der am letzten Ende des Außenrohrs (14) angebracht ist, das in Bezug auf das Einsteckende des Innenrohrs (15) entgegengesetzt ist;
- innerhalb des Griffs (36) das erste Seil oder Riemen (22) an dem Antriebssystem (13, 21, 27) an einem zweiten Befestigungspunkt (26) des ersten Seils oder Riemens befestigt ist.

16. Baumschere oder Astschere nach dem vorhergehenden Anspruch **dadurch gekennzeichnet, dass**
die Umlenkrolle (7) des ersten Seils oder Riemens (22) auf einem im Innenrohr (15) verschiebbaren Traktionswagen (9) angeordnet ist, wobei der Wagen (9) dazu bestimmt ist, die durch das Antriebssystem (13, 21, 27) auf das erste Seil oder Riemen (22) ausgeübte Zugwirkung auf den Scherenkopf (29) zu übertragen.

17. Baumschere oder Astschere nach einem der vorhergehenden Ansprüche **dadurch gekennzeichnet, dass**
die Bewegungsvorrichtung (9, 12, 19), die dafür gedacht ist, die gegenseitige Schließbewegung von Klinge (1) und Gegenklinge (2) zu kontrollieren ein zweites Zugseil oder Riemen (19) enthält, das durch ein Reduktionssystem der Kraft angeordnet ist, das ein Innenrad (40), das in einem Gehäuse des Trägers (8) des Scherenkopfs (29) angeordnet ist umfasst, wobei das Innenrad (40) ein erstes Rad (4) und ein zweites Rad (5) umfasst, die miteinander einstückig sind und unterschiedliche Durchmesser haben, wobei das zweite Seil oder Riemen (19) auf das erste Rad (4) mit größerem Durchmesser gewickelt ist und die Antriebstraktion nach dem Abwickeln von dem ersten Rad (4) und dem entsprechenden Aufwickeln auf das zweite Rad (5) aufbringt, das einen kleineren Durchmesser in Bezug auf den Durchmesser des ersten Rads (4) hat.

18. Baumschere oder Astschere nach dem vorhergehenden Anspruch und nach Anspruch 16 **dadurch gekennzeichnet, dass**
das zweite Zugseil oder Riemen (19) auf der einen Seite an dem Wagen (9) und auf der gegenüberliegenden Seite zwischen Klinge (1) und Gegenklinge (2) befestigt ist.

19. Baumschere oder Astschere nach dem vorhergehenden Anspruch **dadurch gekennzeichnet, dass**
das zweite Zugseil oder Riemen (19) zwischen Klinge (1) und Gegenklinge (2) unter Zwischenschaltung eines Befestigungszuges (12) befestigt ist.

20. Baumschere oder Astschere nach einem der vorhergehenden Ansprüche **dadurch gekennzeichnet, dass**
die Gegenklinge (2) einstückig mit dem Klingenträger (3) ausgebildet ist und die Klinge (1) in Bezug auf die Gegenklinge (2) um einen Gelenkpunkt drehbar ist.

21. Baumschere oder Astschere nach dem vorhergehenden Anspruch und nach Anspruch 17 **dadurch gekennzeichnet, dass**
das zweite Zugseil oder Riemen (19) auf einer Seite an dem Wagen (9) und auf der anderen Seite an der Klinge (1) befestigt ist.

22. Baumschere oder Astschere nach dem vorhergehenden Anspruch **dadurch gekennzeichnet, dass**
die Klinge (1) mit einem Verlängerungsarm (41) versehen ist, an dem die Befestigung des zweiten Zugseils oder Riemens (19) erfolgt, wobei der Arm (41) einen Betätigungshebel der Klinge (1) bildet.

23. Baumschere oder Astschere nach einem der vorhergehenden Ansprüche **dadurch gekennzeichnet, dass**
das elastische Rückführmittel (18) eine Feder ist.

24. Baumschere oder Astschere nach einem der vorhergehenden Ansprüche **dadurch gekennzeichnet**
der Scherenkopf (29) durch Drehung des Klingenträgers (3) in Bezug auf den Träger (8) ausrichtbar ist.

25. Baumschere oder Astschere nach Anspruch 13, **dadurch gekennzeichnet, dass** das Antriebssystem (13, 21, 27) und der Scherenkopf (29) an gegenüberliegenden Enden des gleichen Rohrs angeordnet sind, das zwischen dem Außenrohr (14) und dem Innenrohr (15) ausgewählt ist, zum direkten Anschluss ohne Zwischenschaltung von Ausgleichssystemen zum Ausgleich der teleskopischen Längenänderung der Baumschere oder Astschere.

26. Verfahren zum Steuern einer Baumschere oder Astschere, die mit einem Scherenkopf (29) versehen ist, der eine Klinge (1) und eine Gegenklinge (2) umfasst, die von einem Klingenträger (3) getragen werden, die auf einer Halterung (8) des Scherkopfes (29) angeordnet ist, wobei der Scherenkopf (29) mit einer Bewegungsvorrichtung (9, 12, 19) versehen ist, die dazu bestimmt ist, eine wechselseitige Schließbewegung der Klinge (1) und der Gegenklinge (2) von einer offenen Position in eine geschlossene Position zu steuern, zum Schneiden eines Stücks, das in die durch Klinge (1) und Gegenklinge (2) gebildete Öffnung angeordnet wird, wobei der Scherenkopf (29) ferner mit einem elastischen Rückführmittel (18) für die Rückführung in die offene Position versehen ist, wobei die Baumschere oder Astschere mit einer Teleskopstange (14, 15) versehen ist, die den Scherenkopf (29) an seinem ersten Ende trägt und nahe oder an einem gegenüberliegenden Ende Steuermittel (33) eines Antriebssystems (13, 21, 27) der Baumschere oder Astschere für die Steuerung der Bewegungsvorrichtung (9, 12, 19) umfasst, wobei das Antriebssystem (13, 21, 27) mit einem ersten Seil oder Riemen (22) verbunden ist, das sich entlang einer Längsentwicklungsrichtung (55) der Teleskopstange (14, 15) erstreckt, wobei das erste Seil oder Riemen (22 ) mit der Bewegungsvorrichtung (9, 12, 19) gemäß einer Konfiguration gekoppelt werden kann, in der:
- eine Zugwirkung die auf dem ersten Seil oder Riemen (22) durch das Antriebssystem (13, 21, 27) angewandt wird gemäß einer Zugrichtung der Bewegungsvorrichtung (9, 12,19) entsprechend der Längsausdehnungsrichtung (55) der Teleskopstange (14,15)
- einer Zugwirkung, die durch das erste Seil oder Riemen (22) auf die Bewegungsvorrichtung (9, 12, 19) ausgeübt wird, die dazu bestimmt ist, eine wechselseitige Schließbewegung von Klinge (1) und Gegenklinge (2) zu steuern, entspricht,
in der
das Antriebssystem (13, 21, 27) einen Elektromotor (21) enthält, der gemäß einer Längsmontagerichtung (54) angeordnet ist, die sich im Wesentlichen parallel zu der Längsausdehnungsrichtung (55) der Teleskopstange (14, 15) entwickelt, der Motor (21) mit einer Wickelrolle (13) verbunden ist zum Auf- oder Abwickeln des ersten Seils oder Riemens (22) mit Rotationsachse (51), die parallel zur Längsmontagerichtung (54) und Längsausdehnungsrichtung (55) der Teleskopstange (14, 15) ist, das Antriebssystem (13, 21, 27) ferner mindestens ein erstes Lager (10) umfasst, das in einem nahen Zustand mit der Wickelrolle (13) angeordnet ist und eine Achse des Lagers (56) aufweist, die im Wesentlichen orthogonal in Bezug
auf die Längsausdehnungsrichtung (55) der Teleskopstange (14, 15) ist, wobei das erste Seil oder Riemen (22) in einem Zustand angeordnet ist, in dem es um das erste Lager läuft (10), das ein erstes Rückführ- und Änderungselement einer Bewegungsrichtung des ersten Seils oder Riemens (22) bildet zwischen:
- der Zugrichtung der Bewegungsvorrichtung (9, 12, 19), die längs zur Längsausdehnungsrichtung (55) der Teleskopstange (14, 15) orientiert ist
und
- der Auf- oder Abwickelrichtung in Bezug auf die Aufwickelrolle (13), wobei diese Aufwickel- oder Abwickelrichtung im Wesentlichen orthogonal in Bezug auf die Zugrichtung ist;
wobei das Verfahren die folgenden Schritte umfasst:
a) Aktivieren des Elektromotors (21) in Drehung zum Ziehen des ersten Seils oder Riemens (22) für einen Schneidvorgang;
b) Erkennen des Endes des Schneidvorgangs;
c) Aktivieren des Elektromotors (21) im Gegenlauf zum Lösen des ersten Seils oder Riemens (22) von der Aufwickelrolle (13), wobei das erste Seil oder Riemen (22) durch die Rückstellwirkung der elastischen Mittel zurückgezogen wird.

## Revendications

1. Sécateur-élagueur ou coupe-branches du type ciseaux pourvu d'une tête d'élagage (29) comprenant une lame (1) et une contre-lame (2) qui sont supportées par un support de lame (3) placé sur un support (8) de la tête d'élagage (29), où la tête d'élagage (29) est pourvue d'un dispositif de déplacement (9, 12, 19) destiné à commander un mouvement de fermeture réciproque de lame (1) et contre-lame (2) d'une position ouverte à une position fermée pour couper une pièce placée dans l'ouverture formée par lame (1) et contre-lame (2), la tête d'élagage (29) étant en outre pourvue d'un moyen élastique de retour (18) pour le retour à la position ouverte, le sécateur-élagueur ou coupe-branches étant pourvu d'une barre télescopique (14, 15) pour variation télescopique de la longueur du sécateur-élagueur ou coupe-branches, la barre télescopique (14, 15) portant sur une première extrémité la tête d'élagage (29) et comprenant près ou au niveau d'une d'extrémité opposée des moyens de commande (33) d'un système d'entraînement (13, 21, 27) du sécateur-élagueur ou coupe-branches pour le commande du dispositif de déplacement (9, 12, 19), où le système d'entraînement (13, 21, 27) est connecté à une première corde ou courroie (22) s'étendant dans une direction de développement longitudinal (55) de la barre télescopique (14, 15), la première corde ou courroie (22) étant destinée à être couplée au dispositif de déplacement (9, 12, 19) selon une configuration où :
- une action de traction appliquée sur la première corde ou courroie (22) par le système d'entraînement (13, 21, 27) selon une direction de traction du dispositif de déplacement (9, 12, 19) correspondant à la direction de développement longitudinal (55) de la barre télescopique (14, 15)
correspond à
- une action de traction appliquée par la première corde ou courroie (22) sur le dispositif de déplacement (9, 12, 19) destiné à commander un mouvement de fermeture réciproque de lame (1) et contre-lame (2),
**caractérisé en ce que**
le système d'entraînement (13, 21, 27) comprend un moteur électrique (21) qui est placé selon une direction d'assemblage longitudinal (54) se développant essentiellement parallèle par rapport à la direction de développement longitudinal (55) de la barre télescopique (14, 15), le moteur (21) étant connecté pour la mise en action à une poulie d'enroulement (13) pour enrouler ou dérouler la première corde ou courroie (22) avec un axe de rotation (51) qui est parallèle par rapport à la direction d'assemblage longitudinal (54) et la direction de développement longitudinal (55) de la barre télescopique (14, 15) où une direction d'enroulement (57) de la première corde ou courroie (22) est inclinée par rapport à la direction de développement longitudinal (55) de la barre télescopique (14, 15), le système d'entraînement (13, 21, 27) comprenant en outre des moyens de retour (10, 11) pour le retour dans une condition guidée de la première corde ou courroie (22) avec variation de ladite direction de traction appliquée sur la première corde ou courroie (22) d'une condition parallèle par rapport à la direction de développement longitudinal (55) de la barre télescopique (14, 15) à une direction correspondant à la direction d'enroulement (57) de la première corde ou courroie (22) sur la poulie d'enroulement (13).

2. Sécateur-élagueur ou coupe-branches selon la revendication précédente **caractérisé en ce que**
l'inclinaison entre ladite direction de traction appliquée sur la première corde ou courroie (22) et ladite direction correspondant à la direction d'enroulement (57) de la première corde ou courroie (22) est entre 75 et 105 degrés.

3. Sécateur-élagueur ou coupe-branches selon la revendication précédente **caractérisé en ce que**
l'inclinaison entre ladite direction de traction appliquée sur la première corde ou courroie (22) et ladite direction correspondant à la direction d'enroulement (57) de la première corde ou courroie (22) est essentiellement orthogonale.

4. Sécateur-élagueur ou coupe-branches selon l'une quelconque des revendications précédentes **caractérisé en ce que**
les moyens de retour (10, 11) pour le retour dans une condition guidée de la première corde ou courroie (22) comprennent au moins un premier roulement (10) qui est placé dans une condition de proximité avec la poulie d'enroulement (13) et ayant un axe du roulement (56) essentiellement orthogonal par rapport à la direction de développement longitudinal (55) de la barre télescopique (14, 15), la première corde ou courroie (22) étant placée dans une condition de passage autour du premier roulement (10) qui constitue un premier élément de retour et de variation d'une direction de déplacement de la première corde ou courroie (22) entre :
- la direction de traction du dispositif de déplacement (9, 12, 19) qui est orientée longitudinalement par rapport à la direction de développement longitudinal (55) de la barre télescopique (14, 15)
et
- la direction d'enroulement ou de déroulement (57) par rapport à la poulie d'enroulement (13).

5. Sécateur-élagueur ou coupe-branches selon la revendication précédente **caractérisé en ce que**
les moyens de retour (10, 11) pour le retour dans une condition guidée de la première corde ou courroie (22) comprennent en outre un deuxième roulement (11) ayant un axe du roulement (56) orthogonal par rapport à la direction de développement longitudinal (55) de la barre télescopique (14, 15), le deuxième roulement (11) étant placé espacé par rapport au premier roulement (10), la première corde ou courroie (22) étant placée dans une condition de passage autour du premier roulement (10) qui constitue ledit premier élément de retour et de variation d'une direction de déplacement de la première corde ou courroie (22) entre :
- la direction de traction du dispositif de déplacement (9, 12, 19)
et
- la direction d'enroulement ou de déroulement par rapport à la poulie d'enroulement (13)
la première corde ou courroie (22) étant placée dans une condition de passage autour du deuxième roulement (11) qui constitue un deuxième élément de retour et de variation de la direction de déplacement de la première corde ou courroie (22) pour l'alignement de la première corde ou courroie (22) par rapport à un creux interne de passage de la barre télescopique (14, 15).

6. Sécateur-élagueur ou coupe-branches selon la revendication précédente **caractérisé en ce que**
le moteur (21) est un moteur avec une vitesse nominale de fonctionnement d'environ 11000 tours/minute, couple nominal d'environ 55 mNm.

7. Sécateur-élagueur ou coupe-branches selon l'une quelconque des revendications précédentes **caractérisé en ce que**
le système d'entraînement (13, 21, 27) comprend en outre un dispositif de réduction de vitesse (27) intercalé entre le moteur (21) et la poulie d'enroulement (13).

8. Sécateur-élagueur ou coupe-branches selon la revendication précédente **caractérisé en ce que**
le dispositif de réduction de vitesse (27) a un rapport de réduction d'environ 1:30.

9. Sécateur-élagueur ou coupe-branches selon l'une quelconque des revendications précédentes **caractérisé en ce que**
il comprend une ou plusieurs batteries (38) pour l'alimentation du moteur (21).

10. Sécateur-élagueur ou coupe-branches selon la revendication précédente **caractérisé en ce que**
l'une ou plusieurs batteries (38) sont séparées par rapport au corps du sécateur-élagueur ou coupe-branches et sont connectées au corps du sécateur-élagueur ou coupe-branches au moyen d'un connecteur (37).

11. Sécateur-élagueur ou coupe-branches selon la revendication précédente **caractérisé en ce que**
l'une ou plusieurs batteries (38) sont placées sur un support qui peut être mis par un opérateur.

12. Sécateur-élagueur ou coupe-branches selon la revendication 9 **caractérisé en ce que** l'une ou plusieurs batteries (38) sont intégrées dans le corps du sécateur-élagueur ou coupe-branches.

13. Sécateur-élagueur ou coupe-branches selon l'une quelconque des revendications précédentes **caractérisé en ce que**
la barre télescopique (14, 15) comprend un tuyau externe (14) à l'intérieur duquel de façon coulissante un tuyau interne (15) est appliqué dont l'extraction depuis le tuyau externe (14) permet un allongement de la barre télescopique et dont l'insertion dans le tuyau externe (14) permet un raccourcissement de la barre télescopique, pour le réglage d'une hauteur de coupe du sécateur-élagueur ou coupe-branches, le sécateur-élagueur ou coupe-branches comprenant un serre-tuyau (20) destiné à relâcher et bloquer le coulissement réciproque de tuyau externe (14) et tuyau interne (15).

14. Sécateur-élagueur ou coupe-branches selon la revendication précédente **caractérisé en ce que**
le système d'entraînement (13, 21, 27) est placé près d'une deuxième extrémité finale de la barre télescopique (14, 15) opposée par rapport à la première extrémité de la barre télescopique (14, 15) supportant la tête d'élagage (29), le système d'entraînement (13, 21, 27) étant placé dans une poignée (36), le sécateur-élagueur ou coupe-branches comprenant un système de retour de la première corde ou courroie (22) pour la compensation de la variation télescopique de longueur du sécateur-élagueur ou coupe-branches, le système de retour définissant un parcours de la première corde ou courroie (22) qui est configuré pour permettre l'extension télescopique réciproque entre tuyau interne (15) et tuyau externe (14) maintenant fixe la position du système d'entraînement (13, 21, 27).

15. Sécateur-élagueur ou coupe-branches selon la revendication précédente **caractérisé en ce que**
la tête d'élagage (29) est placée sur la première extrémité de la barre télescopique (14, 15) par fixage sur le tuyau interne (15) et le système d'entraînement (13, 21, 27) est placé sur la deuxième extrémité de la barre télescopique (14, 15) à l'intérieur de la poignée (36) fixée sur le tuyau externe (14), le système de retour de la première corde ou courroie (22) pour la compensation de la variation télescopique de longueur du sécateur-élagueur ou coupe-branches comprenant:
- une série de rainures (30, 31, 32) obtenues sur tuyau externe (14) et tuyau interne (15) selon une configuration où le tuyau interne (15) comprend une première rainure (32) et une deuxième rainure (31) et où le tuyau externe (14) comprend une troisième rainure (30);
- un bouchon coulissant (17) pourvu d'un passage de traversée (49) destiné à être appliqué sur le tuyau interne (15) sur l'extrémité du tuyau interne (15) opposé par rapport à l'extrémité supportant la tête d'élagage (29);
- un œillet (50) obtenu sur le tuyau interne (15) le long d'une des rainures obtenues sur le tuyau interne (15);
le parcours de la première corde ou courroie (22) défini par le système de retour étant tel que:
- la première corde ou courroie (22) est fixée dans un premier point de fixage (25) de la première corde ou courroie qui est près du serre-tuyau (20);
- la première corde ou courroie (22) passe extérieurement au tuyau interne (15) sous le serre-tuyau (20) avec un arrangement placé à l'intérieur de la première rainure (32) et passe le long de la première rainure (32) dans une direction opposée par rapport à la direction orientée vers la position d'application de la tête d'élagage (29) jusqu'à ce qu'elle atteint l'extrémité finale correspondante du tuyau interne (15);
- près de cette extrémité finale du tuyau interne (15), la première corde ou courroie (22) est pliée avec la formation d'une boucle (35) et la première corde ou courroie (22) entre intérieurement au tuyau interne (15) allant en arrière dans une direction opposée è la direction le long de laquelle elle est passée à l'intérieur de la première rainure (32), le passage entre l'extérieur du tuyau interne (15) depuis la première rainure (32) vers le côté interne du tuyau (15) ayant lieu de façon guidée au moyen du bouchon coulissant (17) au moyen d'un passage de la première corde ou courroie (22) à travers le passage de traversée (49) ;
- la première corde ou courroie (22) passe dans le tuyau interne (15) jusqu'à ce qu'elle sort à l'extérieur du tuyau interne (15) à la position d'application de la tête d'élagage (29) pour l'engagement avec le dispositif de déplacement (9, 12, 19) destiné à commander le mouvement de fermeture réciproque de lame (1) et contre-lame (2), le dispositif de déplacement (9, 12, 19) étant pourvu d'une poulie de retour (7) qui permet de renvoyer la première corde ou courroie (22) ;
- la première corde ou courroie (22) renvoyée par la poulie de retour (7) passe dans le tuyau interne (15) dans la direction opposée par rapport à la direction orientée vers la position d'application de la tête d'élagage (29) ;
- après avoir passé à travers une portion de longueur dans le tuyau interne (15), la première corde ou courroie (22) sort du tuyau interne (15) à travers l'œillet (50) obtenu à l'intérieur du logement de coulissement et de guidage défini par la deuxième rainure (31) du tuyau interne (15) ;
- près du serre-tuyau (20), la première corde ou courroie (22) passe sous le serre-tuyau (20) de façon coulissante et continue son parcours dans la troisième rainure (30) qui est présente sur le tuyau externe (14) jusqu'à ce qu'elle pénètre à l'intérieur de la poignée (36) qui est appliquée à l'extrémité finale du tuyau externe (14) opposée par rapport à l'extrémité d'insertion sur le tuyau interne (15) ;
- dans la poignée (36) la première corde ou courroie (22) est fixée au système d'entraînement (13, 21, 27) à un deuxième point de fixage (26) de la première corde ou courroie.

16. Sécateur-élagueur ou coupe-branches selon la revendication précédente **caractérisé en ce que**
la poulie de retour (7) de la première corde ou courroie (22) est placée sur un chariot (9) de traction qui est coulissant dans le tuyau interne (15), le chariot (9) étant destiné au transfert à la tête d'élagage (29) de l'action de traction appliquée par le système d'entraînement (13, 21, 27) sur la première corde ou courroie (22).

17. Sécateur-élagueur ou coupe-branches selon l'une quelconque des revendications précédentes **caractérisé en ce que**
le dispositif de déplacement (9, 12, 19) destiné à commander le mouvement de fermeture réciproque de lame (1) et contre-lame (2) comprend une deuxième corde ou courroie (19) de traction qui est placée à travers un système de réduction de la force comprenant une roue interne (40) qui est placée dans un logement du support (8) de la tête d'élagage (29), la roue interne (40) comprenant une première roue (4) et une deuxième roue (5) solidaires l'une de l'autre et ayant des diamètres différents, la deuxième corde ou courroie (19) étant enroulée sur la première roue (4) ayant un diamètre supérieur et appliquant la traction d'entraînement suivant le déroulement depuis la première roue (4) et enroulement correspondant sur la deuxième roue (5) ayant un diamètre inférieur par rapport au diamètre de la première roue (4).

18. Sécateur-élagueur ou coupe-branches selon la revendication précédente et selon la revendication 16 **caractérisé en ce que**
la deuxième corde ou courroie (19) de traction est fixée au chariot (9) d'un côté et à l'une entre lame (1) et contre-lame (2) du côté opposé.

19. Sécateur-élagueur ou coupe-branches selon la revendication précédente **caractérisé en ce que**
la deuxième corde ou courroie (19) de traction est fixée à l'une entre lame (1) et contre-lame (2) avec l'interposition d'un tirant (12) de fixage.

20. Sécateur-élagueur ou coupe-branches selon l'une quelconque des revendications précédentes **caractérisé en ce que**
la contre-lame (2) est solidaire du support de lame (3) et la lame (1) est rotative sur un point d'articulation par rapport à la contre-lame (2).

21. Sécateur-élagueur ou coupe-branches selon la revendication précédente et selon la revendication 17 **caractérisé en ce que**
la deuxième corde ou courroie (19) de traction est fixée au chariot (9) d'un côté et à la lame (1) de l'autre côté.

22. Sécateur-élagueur ou coupe-branches selon la revendication précédente **caractérisé en ce que**
la lame (1) est pourvue d'un bras (41) d'extension auquel s'effectue le fixage de la deuxième corde ou courroie (19) de traction, le bras (41) constituant un levier d'actionnement de la lame (1).

23. Sécateur-élagueur ou coupe-branches selon l'une quelconque des revendications précédentes **caractérisé en ce que**
le moyen élastique de retour (18) est un ressort.

24. Sécateur-élagueur ou coupe-branches selon l'une quelconque des revendications précédentes **caractérisé en ce que**
la tête d'élagage (29) est orientable par rotation du support de lame (3) par rapport au support (8).

25. Sécateur-élagueur ou coupe-branches selon la revendication 13 **caractérisé en ce que** le système d'entraînement (13, 21, 27) et la tête d'élagage (29) sont placés aux extrémités opposées du même tuyau sélectionné entre tuyau externe (14) et tuyau interne (15), pour connexion directe sans interposition de systèmes de compensation pour compenser la variation télescopique de longueur du sécateur-élagueur ou coupe-branches.

26. Méthode d'entraînement d'un sécateur-élagueur ou coupe-branches du type ciseaux pourvu d'une tête d'élagage (29) comprenant une lame (1) et une contre-lame (2) supportées par un support de lame (3) placé sur un support (8) de la tête d'élagage (29), où la tête d'élagage (29) est pourvue d'un dispositif de déplacement (9, 12, 19) destiné à commander un mouvement de fermeture réciproque de lame (1) et contre-lame (2) d'une position ouverte à une position fermée pour couper une pièce placée dans l'ouverture formée par lame (1) et contre-lame (2), la tête d'élagage (29) étant en outre pourvue d'un moyen élastique de retour (18) pour le retour à la position ouverte, le sécateur-élagueur ou coupe-branches étant pourvu d'une barre télescopique (14, 15) portant la tête d'élagage (29) sur sa première extrémité et comprenant à proximité ou à une extrémité opposée des moyens de commande (33) d'un système d'entraînement (13, 21, 27) du sécateur-élagueur ou coupe-branches pour le commande du dispositif de déplacement (9, 12, 19), où le système d'entraînement (13, 21, 27) est connecté à une première corde ou courroie (22) s'étendant dans une direction de développement longitudinal (55) de la barre télescopique (14, 15), la première corde ou courroie (22) étant destinée à être couplée au dispositif de déplacement (9, 12, 19) selon une configuration où :
- une action de traction appliquée sur la première corde ou courroie (22) par le système d'entraînement (13, 21, 27) selon une direction de traction du dispositif de déplacement (9, 12, 19) correspondant à la direction de développement longitudinal (55) de la barre télescopique (14, 15)
correspond à
- une action de traction appliquée par la première corde ou courroie (22) sur le dispositif de déplacement (9, 12, 19) destiné à commander un mouvement de fermeture réciproque de lame (1) et contre-lame (2),
où
le système d'entraînement (13, 21, 27) comprend un moteur électrique (21) qui est placé selon une direction d'assemblage longitudinal (54) se développant essentiellement parallèle à la direction de développement longitudinal (55) de la barre télescopique (14, 15), le moteur (21) étant connecté pour la mise en action à une poulie d'enroulement (13) pour enrouler ou dérouler la première corde ou courroie (22) avec un axe de rotation (51) qui est parallèle par rapport à la direction d'assemblage longitudinal (54) et la direction de développement longitudinal (55) de la barre télescopique (14, 15), le système d'entraînement (13,21,27) comprenant en outre au moins un premier roulement (10) placé dans une condition de proximité avec la poulie d'enroulement (13) et ayant un axe du roulement (56) orthogonal par rapport à la direction de développement longitudinal (55) de la barre télescopique (14, 15), la première corde ou courroie (22) étant placée dans une condition de passage autour du premier roulement (10) qui constitue un premier élément de retour et de variation d'une direction de déplacement de la première corde ou courroie (22) entre :
- la direction de traction du dispositif de déplacement (9, 12, 19) qui est orientée longitudinalement par rapport à la direction de développement longitudinal (55) de la barre télescopique (14, 15)
et
- une direction d'enroulement ou de déroulement par rapport à la poulie d'enroulement (13), cette direction d'enroulement ou de déroulement étant essentiellement orthogonale par rapport à la direction de traction ;
la méthode comprenant les étapes suivantes:
a) activation du moteur électrique (21) en rotation pour tirer la première corde ou courroie (22) pour action de coupe ;
b) détection de l'extrémité de l'action de coupe ;
c) activation du moteur électrique (21) en contre-rotation pour relâcher la première corde ou courroie (22) depuis la poulie d'enroulement (13), la première corde ou courroie (22) étant tirée en arrière par l'action de retour du moyen élastique.
